(19)

Europäisches
Patentamt

European
Patent Office

Office européen
des brevets

(11) **EP 4 707 043 A1**

(12) **EUROPEAN PATENT APPLICATION**

(43) Date of publication:
**11.03.2026 Bulletin 2026/11**

(21) Application number: **24199351.8**

(22) Date of filing: **09.09.2024**

(51) International Patent Classification (IPC):
**B60L 53/122** (2019.01)       **B60L 53/126** (2019.01)
**B60L 53/36** (2019.01)         **B60L 53/38** (2019.01)
**B60L 53/65** (2019.01)         **B60L 53/30** (2019.01)
**B60L 53/66** (2019.01)         **H02J 50/12** (2016.01)
**H02J 50/80** (2016.01)         **H02J 50/90** (2016.01)
**B60L 53/39** (2019.01)         **H01F 38/14** (2006.01)
**H04B 5/26** (2024.01)

(52) Cooperative Patent Classification (CPC):
**B60L 53/126; B60L 53/122; B60L 53/30;
B60L 53/36; B60L 53/38; B60L 53/39; B60L 53/65;
B60L 53/66; H01F 38/14; H02J 50/12; H02J 50/80;
H02J 50/90; H04B 5/263;** H02J 2105/37

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **WiTricity AI Tech, LLC
Midway, GA 31320 (US)**

(72) Inventors:
 • **MARKMANN, Sergej
  31320 Midway (US)**
 • **WIDMER, Hanspeter
  31320 Midway (US)**

(74) Representative: **HG Law International LLP
26-28 Bedford Row
London WC1R 4HE (GB)**

(54) **POSITIONING SYSTEM AND METHOD FOR WIRELESS CHARGING OF AN ELECTRIC VEHICLE**

(57)     Positioning systems and methods for charging an electric vehicle are described. A resonator assembly has a position monitoring region and a plurality of resonators distributed within the position monitoring region, each resonator having a resonator location in the position monitoring region, wherein each said resonator is configured to transmit a locator signal having a signal - amplitude and an assigned locator signal characteristic associated with the corresponding resonator location. A reader assembly has a receiver configured to receive the locator signal from at least one resonator of the plurality of resonators, and a processor configured to process a distribution of the received locator signals, to determine a position of the reader assembly relative to the resonator assembly, based on: the signal amplitude of the received locator signals; and the assigned locator signal characteristic of the received locator signals.

**EP 4 707 043 A1**

## Description

TECHNICAL FIELD

This application relates to wireless network communication, and in particular, but not exclusively, to establishing communications between an electric vehicle and a wireless charging station for determining a position of the electric vehicle relative to the wireless charging station.

BACKGROUND

Wireless power transfer (WPT) for charging electric vehicles is described in detail in patents such as U.S. Patent 8,933,594, titled "Wireless energy transfer for vehicles", and U.S. Patent 9,561,730, titled "Wireless power transmission in electric vehicles", which are incorporated herein by reference in their entirety. More specifically, these patents refer to inductive WPT between: a ground-based unit, comprised within a ground assembly (GA), of a wireless charging station; and a vehicle-based unit, comprised within a vehicle assembly (VA).

Efficient and regulatory compliant WPT for electric vehicles typically requires a WPT coil in the VA to be aligned with a WPT coil in the GA, within a specified tolerance zone, often referred to as a "charging spot". This tolerance zone can vary and some standards specify a particular tolerance zone of $\pm75$ mm in an x-direction defined by the longitudinal axis of a vehicle being charged, and $\pm100$ mm in a y-direction defined by the lateral axis of the vehicle being charged.

One particular positioning standard is set out in Chapter 12 of SAE J2954, describing a Differential Inductive Positioning System (DIPS), in draft form as of the filing of this disclosure, which provides a single, integrated, long-range coil (horizontally polarized), and four short-range coils (vertically polarized) in a ground unit of a GA of a WPT system, along with two coils present within a corresponding vehicle unit of a VA. DIPS technology provides positioning information within two regions relative to the GA: a guidance region of the ground unit suitable for power transfer by way of the long-range coils; and an alignment region located directly above the ground unit and suitable for power transfer by way of the short-range coils. In one example the guidance region is a region greater than approximately 0.5 m from the ground unit, and the alignment region is a region located 0 m to 0.5 m directly above the ground unit. The positioning information provided within the ground unit guidance region typically relates to orientation direction of the vehicle unit with respect to magnetic fields generated by the integrated DIPS long-range coil of the ground unit, and a distance estimation between the vehicle unit and the ground unit. In the alignment region, the positioning information typically provides a confirmation of whether or not the vehicle unit is located within a specified allowed parking region, which may include a tolerance zone such as that described earlier. Depending on a positioning algorithm used, in most cases DIPS technology may not provide absolute coordinates of the vehicle unit with respect to the alignment region of the ground unit. Since DIPS technology typically makes use of magnetic field distribution for positioning of the vehicle unit within the alignment region of the ground unit, such a system can in some cases be sensitive to the magnetic environment of the ground unit and the vehicle unit. Such sensitivity can provide a reduced compatibility and flexibility in the design of components of such a positioning system, and thus could potentially reduce the number of suitable applications therefor. For example, any change in magnetic design of the ground unit can in most cases impact the magnetic field shape thereof, which could inturn impact the positioning accuracy of a system implementing DIPS technology. Interoperability between different designs of ground unit and vehicle unit could therefore result from such positioning inaccuracy, and could potentially lead to a non standard-compliant field distribution.

Implementation of DIPS short-range coils, as proposed in SAE J2954, may be limited to a specific ground unit design and associated magnetic environment, along with the specific positioning of the DIPS short-range coils therein. Any deviation from the specific ground unit design used to define the SAE J2954 standard, could potentially cause the interoperability and positioning accuracy issues discussed. Solving such issues by way of making a magnetic environment of a new ground unit design compatible, and reengineering the shape and location of the DIPS short-range coils to ensure standard compliance, is a non-trivial task and may not be feasible for certain specific applications and implementations.

It is therefore desired to assist a vehicle user, including an autonomous driving system, in parking and aligning a vehicle within a relatively narrow tolerance zone or charging spot. Such a positioning system, or parking assistance system, may also include guidance provided to the vehicle user in positioning a vehicle relative to a ground unit of a GA to permit efficient and standard compliant wireless power transfer between the VA and the GA.

SUMMARY

Systems and methods of the present disclosure provide an alternate mode of determining a position of a VA relative to a GA in a WPT system, which can be used in addition to, or in replacement of, DIPS-related positioning information as currently set out in the SAE J2954 standard (in draft form as of the filing of this disclosure). For example, a resonator assembly and a reader assembly are provided, resonators of the resonator assembly being configured to provide a locator signal to the reader assembly. The locator signal comprises an signal amplitude and a locator signal characteristic, e.g., an assigned unique locator signal characteristic, associated with a physical location of the resonator. The reader assembly is configured to process the locator signals to determine, based on the signal amplitude and the assigned locator signal characteristic, the location of the reader assembly relative to the resonator assembly. The location may, for example, be an exact coordinate within a predefined area, such as a vehicle charging area. In some examples, the reader assembly or the resonator assembly may determine that the reader assembly is positioned within a charging spot, and may issue instructions to a charging assembly of a WPT to initiate wireless power transfer between a GA and a VA. In some examples, the resonator assembly is integrated into a GA of a WPT, and the reader assembly is integrated into a VA of a WPT. Examples will be appreciated wherein the resonator assembly and the reader assembly may be integrated into either a GA or a VA of a WPT in accordance with a particular intended application. The provision of positional information between resonators and a reader in the present systems and methods may avoid any impact on alterations to the magnetic design of a GA or a VA on positioning accuracy, and may therefore improve flexibility in incorporation of a positioning system across various GA and VA implementations and applications.

In accordance with one aspect of the present disclosure, there is provided a positioning system for determining a position of a vehicle-based wireless power transfer apparatus relative to a ground-based wireless power transfer apparatus, the system comprising: a resonator assembly having a position monitoring region, the resonator assembly comprising a plurality of resonators distributed within the position monitoring region, each said resonator having a resonator location in the position monitoring region, wherein each said resonator is configured to transmit a locator signal, the locator signal having a signal amplitude and an assigned locator signal characteristic, the assigned locator signal characteristic associated with the corresponding resonator location; and a reader assembly positionable relative to the resonator assembly, the reader assembly comprising: a receiver configured to receive the locator signal from at least one resonator of the plurality of resonators; and a processor configured to process a distribution of the received locator signals to determine a position of the reader assembly relative to the resonator assembly, said determination based on: the signal amplitude of the received locator signals; and the assigned locator signal characteristic of the received locator signals. In the context of the present disclosure, the term "resonator location" may be understood to mean a resonator location corresponding to a resonator of the plurality of resonators, or a subregion of the position monitoring region which is common to a subset of the plurality of resonators. In some examples, the resonator location may be a unique resonator location, e.g., a location of a specific resonator in the plurality of resonators, or a location of a resonator in a subset of the plurality of resonators. In accordance with the present disclosure, each resonator location may be associated with one or more assigned locator signal characteristics of corresponding resonators at the location. In examples wherein the resonator location is a unique resonator location corresponding to a single resonator, the assigned locator signal characteristic of the single resonator may be associated with at least the unique resonator location. In examples wherein the resonator location is a subregion of the position monitoring region which is common to a subset of the plurality of resonators, each resonator of the subset of resonators may comprise a unique assigned locator signal characteristic, or may comprise an assigned locator signal characteristic common to the subset of resonators.

It will be appreciated that a resonator according to the present disclosure may be a passive resonator, an active resonator, or a semi-passive resonator, used independently, or in any appropriate combination of resonator types. The receiver may be configured to initiate transmission of the locator signal from the resonators of the plurality of resonators, prior to the receiving of the locator signal. The term "initiate transmission" may include any suitable mode of initiating transmission of the locator signal from the resonators by the receiver, and may for example include exciting the resonators using an interrogation signal transmitted from the receiver. Transmission of the locator signal by the resonator may for example be performed by reflection or backscatter of the interrogation signal transmitted from the receiver.

The signal amplitude of the locator signal correlates to a proximity of the corresponding resonator to the receiver receiving the locator signal, and thereby serves as an indicator of proximity of a particular resonator, of the plurality of resonators, to the receiver. Each of the plurality of resonators may comprise a resonant circuit configured to resonate at a particular frequency of an interrogation signal transmitted by the receiver. This complimentary resonance optimizes energy absorption efficiency at the resonator, and thereby maximizes the energizing of the (optionally passive) resonator, causing the resonator to produce, or reflect, a locator signal having a more pronounced assigned locator signal characteristic, by comparison to a non-resonant circuit or a circuit resonating at a frequency which is significantly different to the frequency of the interrogation signal. Maximizing efficiency of excitation of the resonator with an interrogation signal, and resultant strengthening of the assigned locator signal characteristic of the locator signal, may therefore improve accuracy of the position determination. The absorbed energy powers internal circuitry of the resonator, which may for example modulate the incoming interrogation signal from the receiver, for example by altering the impedance of the resonator circuitry. The locator signal, which may be a modulated locator signal, is then reflected, or backscattered, toward the receiver.

As the locator signal travels back to the receiver, the receiver may experience reduced coupling to the corresponding resonator, the coupling reducing with increasing distance. This decrease in signal strength in proportion to the decreased proximity of the resonator to the receiver means that the amplitude of the locator signal received at the receiver serves as a robust indicator of the proximity of the resonator to the receiver.

The assigned locator signal characteristic may be any suitable characteristic of the locator signal, wherein the assigned locator signal characteristic links the corresponding resonator to the resonator location within the position monitoring region of the resonator assembly. The resonator location may in some examples be unique to the resonator, or may in some examples be a subregion of the position monitoring region in which a subset of the plurality of resonators are located. As such the processor may use the proximity information provided by the signal amplitude of the received locator signals, combined with the positional information encoded in the assigned locator signal characteristic of the received locator signals, to determine a position of the reader assembly relative to the resonator assembly. In some examples wherein the locator signal comprises a frame structure, the locator signal characteristic may be any suitable component of the frame structure, for example a signal preamble, or header.

The assigned locator signal characteristic may, for example, be related to a property of the corresponding resonator, or to a property of the receiver. The assigned locator signal characteristic may, in some examples, be associated with a property of the resonator and may, for example, be associated with, or at least in-part dependent on, one or more electrical characteristics of the corresponding resonator. In such examples, at least one of the one or more electrical characteristics may be selected from a group consisting of: modulation frequency; Q-factor; impulse response; magnetic response. Examples will be appreciated wherein any suitable electrical characteristic of the corresponding resonator which affects the locator signal may be used as, or may be associated with, the assigned locator signal characteristic of the corresponding resonator.

In some examples, the assigned locator signal characteristic may be at least in-part dependent on one or more selected from: a modulation frequency of the corresponding resonator; an allocated locator signal time slot of the corresponding resonator; an allocated locator signal encoding of the corresponding resonator. In examples wherein the assigned locator signal characteristic is dependent on a modulation frequency of the corresponding resonator, each resonator of the plurality of resonators may comprise a designated modulation frequency. In such examples, each said resonator may modulate an interrogation signal from the receiver in an assigned manner in accordance with the modulation frequency, which is linked with the physical location of the resonator in the position monitoring region. The modulation frequency may be unique to a specific resonator or may be common to a subset of the plurality of resonators, the modulation frequency associated with a resonator location of the resonator or the subset of resonators.

In some examples in which the assigned locator signal characteristic is at least in part dependent on an allocated time slot of the corresponding resonator, the receiver may impose a time division multiplexing process on the initiated transmission of the locator signals, such that locator signals from a particular resonator are transmitted during an allocated time slot of the particular resonator. The allocated time slot may, for example, be associated with the corresponding resonator location within the position monitoring region of the resonator assembly such the receiver may use the proximity information provided by the signal amplitude of the received locator signals, combined with the positional information encoded in the allocated time slot of the received locator signals, to determine a position of the reader assembly relative to the resonator assembly. In such examples, it will be appreciated that resonators having a different allocated time slot may comprise the same modulation frequency, or a different modulation frequency. In some examples, a frame structure component of the locator signal, for example a locator signal preamble, may be used to encode or determine the allocated time slot of the corresponding resonator. In some examples, the reader assembly may process frame structure component, for example the preamble, to identify the temporal beginning of the locator signal of the resonator. By knowing the allocated time slot for each resonator, the reader assembly may associate the preamble of a locator signal to a known position or location of the corresponding resonator as part of the position determination. In some examples, the reader assembly may use the frame structure component, for example the preamble, to perform a synchronisation between the reader assembly and corresponding resonator, such as a time synchronization.

In some examples in which the assigned locator signal characteristic is at least in part dependent on an allocated locator signal encoding of the corresponding resonator, the receiver may impose a code division multiplexing process on the initiated transmission of the locator signals, such that locator signals from a particular resonator are encoded in accordance with an allocated encoding protocol of the particular resonator. The allocated locator signal encoding may, for example, be associated with the corresponding resonator location within the position monitoring region of the resonator assembly such the receiver may use the proximity information provided by the signal amplitude of the received locator signals, combined with the positional information encoded in the allocated locator signal encoding of the received locator signals, to determine a position of the reader assembly relative to the resonator assembly. In such examples, it will be appreciated that resonators having a different allocated locator signal encoding may comprise the same, or different, modulation frequency or time slot allocation. In some such examples, the allocated locator signal encoding is configured to encode the locator signal with an assigned frequency hopping pattern. The assigned frequency hopping pattern may be unique to a specific resonator or may be common to a subset of the plurality of resonators, the assigned frequency hopping pattern associated with a resonator location of the resonator or the subset of resonators.

In some examples, the receiver is configured to transmit an interrogation signal to be received by resonators of the resonator assembly, the interrogation signal comprising a predetermined carrier frequency; and wherein the resonators of the resonator assembly comprise a resonant circuit having a resonant frequency approximately equal to the carrier frequency. As noted herein, a complimentary resonance of the resonant circuit of the resonator may maximize energy absorption efficiency of the interrogation signal, thereby maximizing the reflected energy of the locator signal such that the assigned locator signal characteristic may be maximally represented in the locator signal, and may therefore be more easily detected by the reader assembly for determining the position of the reader assembly relative to the resonator assembly.

In some examples, the resonant circuit of each resonator may comprise an assigned modulation frequency of the corresponding resonator; wherein the assigned locator signal characteristic corresponds to the assigned modulation frequency. In such examples, the assigned modulation frequency is linked to the resonator location of the corresponding resonator within the position monitoring region of the resonator assembly. The modulation frequency may be unique to a specific resonator or may be common to a subset of the plurality of resonators, the modulation frequency associated with a resonator location of the resonator or the subset of resonators. Each of the resonators may modulate (for example by way of amplitude modulation) the received interrogation signal having the carrier frequency, using the modulation frequency of the resonator. The energy required for performing the modulation (for example amplitude modulation) may be extracted by the resonator from the interrogation signal received from the receiver, for example using a dedicated circuit. In some examples, the required energy may be obtained or extracted in any suitable manner, such as by wireless power transfer. A distribution of the received locator signals from resonators within the resonator assembly may be received by the processor. In the case of harmonic amplitude modulation of the interrogation signal, the signal spectrum may be represented by a plot of frequency and spectral amplitude, and may comprise modulation frequency-specific sidebands appearing relative to the carrier frequency, at positions according to the difference between the modulation frequency and the carrier frequency. From the signal spectrum providing the signal amplitude of the locator signals combined with the modulation frequency component (the assigned locator signal characteristic), the processor may determine a position of the reader assembly relative to the resonator assembly. By way of example, the processor may use the following formulae to determine the position of the reader assembly relative to the resonator assembly in the form of an $x, y$ coordinate:

$$x = \frac{\sum_i A_{mod,i} x_i}{\sum_i A_{mod,i}}, \text{ and } y = \frac{\sum_i A_{mod,i} y_i}{\sum_i A_{mod,i}},$$

wherein $x_i$ and $y_i$ are respective coordinates of each resonator $i$, inferred from the assigned locator signal characteristic of the respective locator signal, which in the example described is an assigned modulation frequency; and wherein $A_{mod,i}$ is the modulated spectral amplitude of the locator signal for resonator $i$.

In some examples, the assigned modulation frequency of each corresponding resonator may differ from an assigned modulation frequency of a different corresponding resonator of the plurality of resonators by a predetermined modulation frequency difference; wherein the assigned modulation frequencies of the plurality of resonators are within a frequency bandwidth, and wherein the frequency bandwidth corresponds to the product of the predetermined modulation frequency difference and the number of resonators in the plurality of resonators. In some examples, the modulation frequency between resonators in the plurality of resonators may differ by a fixed modulation frequency difference, which may for example be approximately 100 Hz. Examples will be appreciated wherein the modulation frequency difference may be any suitable modulation frequency difference, and the modulation frequency difference may be selected based on a particular application, a particular number of resonators in the resonator assembly, a particular spatial arrangement of resonators within the position monitoring region, or a particular desired locator signal bandwidth to be processed by the processor. In some examples, the modulation frequency difference may be determined based on the number of resonators of the resonator assembly, and an allocated frequency bandwidth of the resonator assembly. By way of example in which the resonator assembly comprises an array of 64 resonators distributed within the position monitoring region, and wherein the example modulation frequency difference is 100 Hz, locator signals from all 64 resonators of the resonator assembly would occupy a 6.3 kHz bandwidth. In some examples, the processor may be further configured to: mix the received locator signals down into a baseband; and filter the received and downmixed locator signals using the frequency bandwidth. In such examples, a circuit of each of the resonators may be configured such that the modulation of the interrogation signal from the receiver is harmonic (for example a single modulation frequency), and the locator signals may be down mixed into the base band and filtered in accordance with a desired bandwidth, which may in the example described be 6.3 kHz. In some examples, the modulation frequency may differ by the modulation frequency difference between immediately adjacent or neighboring resonators within the position monitoring region. Positioning resonators which have a minimal difference in their corresponding assigned modulation frequency such that the resonators are proximate one another, or adjacent, within the position monitoring region may act to reduce the filtering bandwidth required and may thereby act to improve the signal to noise ratio.

In some examples, the processor is configured to process the received locator signals having a frequency within a predefined frequency range or bandwidth about the predetermined carrier frequency. In some such examples, the predetermined carrier frequency is proximate a center frequency of the predetermined frequency range. In some such examples, the predefined frequency range may be any suitable frequency range or band, such as 90 kHz to 150 kHz, and the predefined bandwidth may be equal to or less than 60 kHz, and is preferably less than 10 kHz. The predefined bandwidth is in some preferable examples 6.3 kHz. The frequency range or band may in some examples be any frequency band for short-range devices, or any near-field frequency band, such as any suitable Industrial, Scientific, and Medical (ISM) band.

In some examples the received locator signal may be a square wave signal (which may be a reflection or backscatter of a square wave interrogation signal transmitted by the receiver). In such examples, when amplitude modulation is employed, a greater number of modulation frequency-specific sidebands may be observed, for example due to a higher order of Fourier components associated with square wave signals. Since square wave signals comprise odd harmonics of a particular fundamental frequency, it may be necessary in such examples to eliminate higher harmonics, such as harmonics equal to or above the third harmonic. Therefore, in examples wherein the assigned locator signal characteristic is an assigned modulation frequency, the modulation frequency of resonators of the plurality of resonators may be selected such that the locator signals comprise a third harmonic thereof which is located outside the predefined frequency range. In a particular example comprising 64 resonators having a predefined modulation frequency difference of 100 Hz and therefore defining a predefined frequency bandwidth of 6.3 kHz about a predetermined carrier frequency, a resonator of the plurality of resonators may comprise a modulation frequency 3 kHz, and therefore a third harmonic of 9 kHz, which is outside of the predefined frequency bandwidth of 6.3 kHz.

In some examples, resonators of the plurality of resonators may be configured to modify the assigned locator signal characteristic based on the interrogation signal. In some such examples wherein the assigned locator signal characteristic is associated with an assigned modulation frequency of resonators of the plurality of resonators, the resonators may be configured to modify the corresponding assigned modulation frequency based on the interrogation signal.

In some examples, the processor may be further configured to perform a first position determination at a first time instance and a second position determination at a second time instance later than the first time instance; and predict a third position determination at a third time instance later than the second time instance, based on the first position determination and the second position determination. In some examples the prediction comprises modeling, by the processor, a trajectory of the reader assembly using the first position determination and the second position determination. As such, in some examples, the processor may reduce the frequency or rate of position determinations required, for example during a parking event, by using previous position determinations to predict a future position determination, which may include modeling a trajectory of the reader assembly or vehicle in communication therewith. The reduction in the frequency or rate of position determinations using the present systems and methods may in some examples reduce the processing requirements of monitoring a position of a vehicle, for example during a parking event. The processor may in some examples be further configured to receive or determine direction data or velocity data of the reader assembly or vehicle, for example by way of an accelerometer, and may use the data to perform the prediction or modeling.

In some examples, the processor is further configured to: process the signal distribution to detect an interference signal; and is further configured to modify the interrogation signal based on the detected interference signal. The processor may in some examples perform continuous interference monitoring for detecting interference signals, for example signals occurring at particular frequencies of the carrier frequency of the interrogation signal, or at one or more frequencies of known locator signals. The processor may, in response to said detection, modify the carrier frequency such that the carrier frequency and the known locator signal frequencies do not comprise the frequency of the interference signal. In some examples, the processor may modify the interrogation signal in response to the interference signal detection, such that resonators of the plurality of resonators are caused to modify the assigned modulation frequency, wherein the associated locator signals of the resonators are adjusted such that frequencies thereof do not comprise a frequency of the interference signal. The processor may in some examples be configured to detect or scan received signals across a frequency bandwidth or frequency range, and further configured to determine, from the detected or scanned frequency bandwidth or frequency range one or more frequencies, frequency bands or frequency ranges having a lowest amount of interference or signal noise. The processor may be configured to, in response to said determination, cause such a modification to the interrogation signal, or the assigned locator signal characteristic, or any suitable combination thereof.

In some examples, the resonator assembly comprises a crystal oscillator, wherein each resonator of the plurality of resonators is configured to perform clock synchronization based on the crystal oscillator. The crystal oscillator, and the associated clock synchronization performed by the resonators, may provide stability to signal characteristics of the locator signal of the resonators of the resonator assembly. In some examples, the resonators are configured to modify the assigned locator signal characteristic based on the clock synchronization. As such in some examples the resonators may be configured to derive the respective assigned locator signal characteristic, for example an assigned modulation frequency, based on the clock synchronization.

In some examples, each resonator of the plurality of resonators comprises a corresponding the crystal oscillator. In other examples, the resonator assembly comprises a single the crystal oscillator, wherein each resonator of the plurality of resonators is configured to perform clock synchronization based on the single crystal oscillator. Therefore in some examples each resonator may perform clock synchronization based on a corresponding the crystal oscillator, and in other examples the clock synchronization may be performed in all resonators based on a single crystal oscillator of the resonator assembly.

In some examples, the plurality of resonators comprises at least one of: a passive resonator; an active resonator; or a semi-passive resonator. Examples will be appreciated wherein resonators of the resonator assembly may be any suitable combination of passive, semi-passive, or active resonators. It will be appreciated that in examples wherein the resonators are active, the resonators of the resonator assembly may be configured to transmit a carrier signal having a predefined carrier signal characteristic, such as a carrier signal frequency. The carrier signal transmitted by the resonators may additionally be modified by a corresponding circuit of a resonator according to an assigned locator signal characteristic of the of the resonator. In such examples, the receiver may be configured to receive the carrier signal and the modified carrier signal from the resonators. The processor may, in some such examples, use the carrier signal received from the resonators to perform clock synchronization.

In some examples, the processor is further arranged to, based on the position determination, transmit instructions to a wireless power transfer system comprising a vehicle-based wireless power transfer apparatus and a ground-based wireless power transfer apparatus, the instructions configured to cause wireless power transfer between the vehicle-based wireless power transfer apparatus and the ground-based wireless power transfer apparatus. It will be appreciated that in some examples, the methods and systems of the present disclosure may inform the transfer of power to or from a vehicle battery by way of a WPT system. The transfer of power may be triggered in response to a determination, by the methods and systems of the present disclosure, that a vehicle is at a location at which it may engage in wireless power transfer. For example, the processor may be configured to compare the determined position of the reader assembly relative to the resonator assembly with a known power transfer location or a known power transfer region at which wireless power transfer is permitted. Upon detection that, based on the comparison, the determined position is at, or within an acceptable proximity threshold to, the power transfer location or the power transfer region, the processor may cause the power transfer, for example by transmitting instructions to the WPT system to initiate wireless power transfer. Such wireless power transfer may be performed by any suitable technique such as those described herein.

In some examples, the resonator assembly is integrated into the ground-based wireless power transfer apparatus of the wireless power transfer system, and wherein the reader assembly is integrated into the vehicle-based wireless power transfer apparatus of the wireless power transfer system. In some such examples, movement of the vehicle may cause movement of the reader assembly relative to the resonator assembly. As the reader assembly moves relative to specific resonators of the resonator assembly, a signal amplitude of the locator signal corresponding to said resonators changes in accordance with the proximity of the reader assembly relative to the resonators. By processing the distribution of the received locator signals, the processor may determine, based on the signal amplitude, and an assigned locator signal characteristic specific to a known resonator location of the corresponding resonators, the relative position of the reader assembly with respect to the resonator assembly.

In some examples, the plurality of resonators comprises a plurality of resonator groups, each resonator group comprising one or more resonators having a corresponding locator signal value of the assigned locator signal characteristic; wherein each locator signal value is associated with the corresponding resonator group. In such examples, resonators of the resonator assembly may be grouped according to a specific value, or value type, of the corresponding locator signal or the assigned locator signal characteristic. In some such examples, a frequency of the locator signal, or a modulation frequency of the corresponding resonators, may correspond to an allocated resonator group of said resonators. In some examples, frequency values of locator signals of one of the resonator groups may comprise odd frequencies, for example odd frequencies within a particular frequency range or bandwidth. Other resonator group frequency values of locator signals of the resonator group may comprise even frequencies, for example even frequencies within a particular frequency range or bandwidth.

In some examples, the position monitoring region may comprise a plurality of discrete subregions, each subregion comprising a corresponding one of the resonator groups. By spatially distributing the resonator groups, having group-specific locator signal values of the assigned locator signal characteristic, improved accuracy or precision of the position determination by the processor may be provided. For example, by knowing the regional distribution of specific locator signal values, a fast estimation of the position may be performed. The determining of the relative position of the reader assembly by the processor may comprise a first position determination, the first position determination comprising: detecting, by the processor, a subregion of the subregions of the position monitoring region, relative to which the reader assembly is located. The detected subregion of the subregions, may in some examples be a subregion in which a known power transfer location, or a known power transfer region, is located. The determining may further comprise a second position determination comprising: in response to the detecting, determining, by the processor, the position of the reader assembly relative to the resonator assembly. In such examples, the processor may perform a fast detection of a subregion relative to which the reader assembly is located, which may in such examples act as an initial screening process for identifying a subregion in which a known power transfer location is located. Such fast first position determination may, for example, be more suited for processing while a vehicle is moving quickly relative to a ground assembly of a WPT. In response to the detection of a subregion comprising a power transfer location, the processor may be configured to perform the second position determination, which may in some examples provide a more accurate or precise indication of a relative position of the reader assembly relative to the resonator assembly. Such a second position determination may, in some examples, require more processing time or processing power than a said subregion detection, such that the second position determination may be more suited for processing while a vehicle is moving slowly relative to a ground assembly of a WPT, for example in order to more accurately or precisely position the vehicle relative to a known power transfer location or a known power transfer region, such that wireless power transfer may be permitted.

In some examples, a resonator of the plurality of resonators is configured to communicate with the reader assembly by way of a communication channel other than the locator signal. In some examples, a said interrogation signal transmitted by the receiver may be used as a said communication channel. The processor may determine, based on the received locator signals, a communication channel which comprises an interference level below an interference threshold. The determined communication channel may be used as a communication between the reader assembly and the resonator assembly which does not comprise the locator signals. In some examples, time division multiplexing may be used in order to ensure no temporal overlap between a transmission time of the communication channel and a transmission time of the locator signals.

In some examples, the resonator assembly may comprise a communication resonator configured to communicate, for example with the reader assembly, by way of a communication channel which comprises a communication frequency different to a frequency of other resonators of the resonator assembly. In some examples, the communication resonator is an active resonator. In some examples, the communication resonator may spatially overlap with one or more other resonators of the resonator assembly. The communication resonator may, in some examples, be configured to communicate by way of the communication channel during the transmission of the locator signals. In some examples, communication by way of the communication channel performed by the communication resonator is performed using any one selected from frequency division multiplexing, time-division multiplexing, code-division multiplexing.

In some examples, the positioning system may be compliant with the SAE J2954 standard, or may be part of a system which is compliant with the SAE J2954 standard, such that the positioning system of the present disclosure does not preclude standard compliance. Systems and methods of the present disclosure may be used in conjunction with the SAE J2954 standard or as an alternative thereto. In examples wherein the systems and methods are used in conjunction with the SAE J2954 standard, the positioning system is preferably compliant with the SAE J2954 standard. In accordance with a further aspect of the present disclosure, there is provided a method for determining the position of a vehicle-based wireless power transfer apparatus relative to a ground-based wireless power transfer apparatus, the method comprising: positioning a reader assembly relative to a resonator assembly comprising a plurality of resonators spatially distributed within a position monitoring region of the resonator assembly, each resonator of the plurality of resonators having a resonator location within the position monitoring region, and each said resonator configured to transmit a locator signal having a signal amplitude and an assigned locator signal characteristic, the assigned locator signal characteristic associated with the corresponding resonator location; receiving the locator signal from one or more said resonators; determining a location of the reader assembly relative to the resonator assembly, said determination based on the signal amplitude and the assigned locator signal characteristic of the received locator signal.

In some examples, the method may further comprise: initiating transmission of the locator signal from at least one resonator of the plurality of resonators using a receiver of the reader assembly. In some examples, the initiating transmission may comprise: transmitting, by the receiver, an interrogation signal to be received by resonators of the resonator assembly. In some such examples, the resonators may be passive resonators, and the receiver may be configured to excite the resonators, for example using an interrogation signal, to initiate transmission (for example by way of reflection or backscatter of the interrogation signal) of the locator signal. Examples will be appreciated wherein the initiating of transmission may be by any suitable technique, such as those discussed herein.

In some examples, the method may be performed by a positioning system in accordance with the first aspect. It will be appreciated therefore that any features described in relation to the positioning system of the present disclosure will be suitable for use in the method of the present disclosure.

In accordance with a further aspect of the present disclosure, there is provided a non-transitory storage medium having computer-readable instructions stored thereon, the computer readable instructions operable when executed by a processing device to, in response to positioning of a reader assembly relative to a resonator assembly comprising a plurality of resonators spatially distributed within a position monitoring region of the resonator assembly, each resonator of the plurality of resonators having a resonator location within the position monitoring region, and each said resonator configured to transmit a locator signal having a signal amplitude and an assigned locator signal characteristic, the assigned locator signal characteristic associated with the corresponding resonator location: receive a locator signal from one or more said resonators; and determine a location of the reader assembly relative to the resonator assembly, said determination based on the signal amplitude and the assigned locator signal characteristic of the received locator signal.

In accordance with a further aspect of the present disclosure, there is provided a non-transitory storage medium having computer-readable instructions stored thereon, the computer readable instructions operable when executed by a processing device to: initiate transmission of a locator signal from at least one resonator of a plurality of resonators of a resonator assembly, using a receiver of a reader assembly, the plurality of resonators spatially distributed within a position monitoring region of the resonator assembly, each resonator of the plurality of resonators having a resonator location within the position monitoring region, and each said resonator configured to transmit the locator signal having a signal amplitude and an assigned locator signal characteristic, the assigned locator signal characteristic associated with the corresponding resonator location; receive the locator signal from one or more said resonators; and determine a location of the reader assembly relative to the resonator assembly, said determination based on the signal amplitude and the assigned locator signal characteristic of the received locator signal.

In some examples of a non-transitory storage medium of the present disclosure, the computer-readable instructions may be operable, when executed by the processing device, to perform any suitable steps of a method of the present disclosure, or any steps performed or performable by a positioning system in accordance with the present disclosure. It will be appreciated therefore that any features described in relation to the positioning system or the method of the present disclosure will be suitable for use in a non-transitory storage medium of the present disclosure.

According to an aspect of the present disclosure, there is provided a resonator assembly configured to cooperate with a reader assembly for determining a position of a vehicle-based wireless power transfer apparatus relative to a ground-based wireless power transfer apparatus. The resonator assembly comprises a position monitoring region. The resonator assembly comprises a plurality of resonators distributed within the position monitoring region, each said resonator having a resonator location in the position monitoring region, wherein each said resonator is configured to transmit a locator signal to the reader assembly, the locator signal having a signal amplitude and an assigned locator signal characteristic the assigned locator signal characteristic associated with the corresponding resonator location. In some examples, the resonator assembly is provided as part of a ground assembly of a wireless power transfer apparatus. In some examples, the resonator assembly is provided as part of a vehicle assembly of a wireless power transfer apparatus. In some examples, the resonator assembly is positionable relative to the reader assembly, e.g., by virtue of movement of a vehicle to which the resonator assembly (or vehicle assembly) is installed. In some examples, the resonator assembly is a resonator assembly of a positioning system in accordance with the present disclosure, and any features described herein as suitable for incorporation within a positioning system are intended as suitable for incorporation within a resonator assembly of the present disclosure.

According to an aspect of the present disclosure, there is provided a reader assembly configured to cooperate with a resonator assembly for determining a position of a vehicle-based wireless power transfer apparatus relative to a ground-based wireless power transfer apparatus. The reader assembly comprises a receiver configured to receive a plurality of locator signals from respective resonators within the resonator assembly. The reader assembly comprises a processor configured to process a distribution of the received locator signals, to determine a position of the reader assembly relative to the resonator assembly, the determination based on: the signal amplitude of the received locator signals; and the assigned locator signal characteristic of the received locator signals. In some examples, the reader assembly is provided as part of a vehicle assembly of a wireless power transfer apparatus. In some examples, the reader assembly is positionable relative to the resonator assembly, e.g., by virtue of movement of a vehicle to which the reader assembly (or vehicle assembly) is installed. In some examples, the reader assembly is provided as part of a ground assembly of a wireless power transfer apparatus. In some examples, the reader assembly is a reader assembly of a positioning system in accordance with the present disclosure, and any features described herein as suitable for incorporation within a positioning system are intended as suitable for incorporation within a reader assembly of the present disclosure. According to an aspect of the present disclosure, there is provided a vehicle comprising a reader assembly in accordance with the present disclosure.

According to an aspect of the present disclosure, there is provided a vehicle comprising a reader assembly configured to cooperate with a resonator assembly for determining a position of a vehicle-based wireless power transfer apparatus relative to a ground-based wireless power transfer apparatus. The reader assembly is positionable relative to the resonator assembly, e.g., by virtue of movement of the vehicle. The reader assembly comprises a receiver configured to receive a plurality of locator signals from respective resonators within the resonator assembly. The reader assembly comprises a processor configured to process a distribution of the received locator signals, to determine a position of the reader assembly relative to the resonator assembly, the determination based on: the signal amplitude of the received locator signals; and the assigned locator signal characteristic of the received locator signals.

According to an aspect of the present disclosure, there is provided a vehicle assembly of a wireless power transfer apparatus, the vehicle assembly comprising a reader assembly configured to cooperate with a resonator assembly for determining a position of the wireless power transfer apparatus relative to a ground-based wireless power transfer apparatus. The reader assembly is positionable relative to the resonator assembly, e.g., by virtue of movement of a vehicle to which the vehicle assembly is attached. The reader assembly comprises a receiver configured to receive a plurality of locator signals from respective resonators within the resonator assembly. The reader assembly comprises a processor configured to process a distribution of the received locator signals, to determine a position of the reader assembly relative to the resonator assembly, the determination based on: the signal amplitude of the received locator signals; and the assigned locator signal characteristic of the received locator signals.

According to an aspect of the present disclosure, there is provided a ground assembly of a wireless power transfer apparatus, the ground assembly comprising a resonator assembly configured to cooperate with a reader assembly for determining a position of a vehicle-based wireless power transfer apparatus relative to a ground-based wireless power transfer apparatus. The resonator assembly comprises a position monitoring region. The resonator assemble comprises a plurality of resonators distributed within the position monitoring region, each said resonator having a resonator location in the position monitoring region, wherein each said resonator is configured to transmit a locator signal to the reader assembly, the locator signal having a signal amplitude and an assigned locator signal characteristic the assigned locator signal characteristic associated with the corresponding resonator location.

It will be appreciated that any features described herein as suitable for incorporated into one or more aspects or examples of the present disclosure are intended to be generalisable across any and all aspects and examples of the present disclosure.

BRIEF DESCRIPTION OF THE DRAWINGS

FIG. 1 illustrates an example parking facility with multiple wireless charging stations for use by electric vehicles in accordance with systems and methods of the present disclosure;

FIG. 2 is a hierarchical block diagram of an example wireless power transfer system for wireless electric vehicle charging, suitable for use in accordance with systems and methods of the present disclosure;

FIG. 3A shows an example parking space and a parking scenario illustrating a positional relationship between a vehicle and a wireless charging station in a ground-based coordinate system, suitable for use in accordance with systems and methods of the present disclosure;

FIG. 3B shows an example parking space and a parking scenario illustrating a positional relationship between a wireless charging station and a vehicle in a vehicle-based coordinate system, suitable for use in accordance with systems and methods of the present disclosure;

FIG. 4 shows a multiple parking space facility providing a plurality of wireless charging stations illustrating an example parking scenario with a vehicle, suitable for use in accordance with systems and methods of the present disclosure;

FIG. 5A shows an example positioning system in accordance with the present disclosure representing a first example vehicle parking scenario;

FIG. 5B depicts an example distribution of locator signals received in the example first parking scenario of FIG. 5A, these locator signals plotted using frequency division multiplexing, demonstrating the use of resonator-specific modulation frequencies in conjunction with locator signal amplitude to perform a position determination in accordance with systems and methods disclosed herein;

FIG. 6A shows the example positioning system of FIG. 5A representing a second example parking scenario wherein the vehicle is moved relative to the first parking scenario in the process of approaching a charging region of a wireless power transfer system;

FIG. 6B depicts a further example distribution of locator signals received in the example second parking scenario of FIG. 6A;

FIG. 7 depicts a similar example locator signal distribution to the plot of FIG. 5B, the plot of FIG. 7 also representing the first parking scenario of FIG. 5A, wherein the received locator signals are square wave signals;

FIG. 8 depicts an example distribution of locator signals received in the system and first parking scenario as depicted in FIG. 5A, these locator signals plotted using time division multiplexing, demonstrating the use of resonator-specific transmission time slots in conjunction with locator signal amplitude to perform a position determination in accordance with systems and methods disclosed herein;

FIG. 9 depicts a further example distribution of locator signals received in the system of FIG. 5A, these locator signals plotted using code division multiplexing, demonstrating the use of resonator-specific locator signal encoding in conjunction with locator signal amplitude to perform a position determination in accordance with systems and methods disclosed herein;

FIG. 10A depicts an example distribution of locator signals as shown in FIG. 5A including the presence of a detected interference signal, and FIG. 10B depicts the plotted locator signals following a shift of the carrier frequency in interference mitigation, in accordance with systems and methods disclosed herein;

FIG. 11 shows a further example positioning system in accordance with the present disclosure representing an example vehicle parking scenario depicting the position of a reader assembly of a vehicle relative to a resonator assembly at three different times during the parking scenario;

FIG. 12A shows a positional heatmap of signal amplitude values of locator signals received at the reader assembly from resonators of the resonator assembly at the first time during the parking scenario depicted in FIG. 11, and FIG. 12B shows a chart of the signal amplitude values corresponding to each resonator of the resonator assembly at the first time;

FIG. 13A shows a positional heatmap of signal amplitude values of locator signals received at the reader assembly from resonators of the resonator assembly at the second time during the parking scenario depicted in FIG. 11, and FIG. 13B shows a chart of the signal amplitude values corresponding to each resonator of the resonator assembly at the second time;

FIG. 14A shows a positional heatmap of signal amplitude values of locator signals received at the reader assembly from resonators of the resonator assembly at the third time during the parking scenario depicted in FIG. 11, and FIG. 14B shows a chart of the signal amplitude values corresponding to each resonator of the resonator assembly at the third time;

FIG. 15A shows a chart of signal amplitude values of locator signals received at the reader assembly from resonators of the resonator assembly during the first time of the parking scenario depicted in FIG. 11, each resonator having a corresponding transmission time slot according to their position in the resonator assembly; and FIG. 15B shows a chart depicting the time slots of each resonator of the resonator assembly;

FIG. 16A shows a chart of signal amplitude values of locator signals received at the reader assembly from resonators of the resonator assembly during the second time of the parking scenario depicted in FIG. 11, each resonator having a corresponding transmission time slot according to their position in the resonator assembly; FIG. 16B shows a chart depicting the time slots of each resonator of the resonator assembly; and FIG. 16C and FIG. 16D each depict a close up view of the charts of FIG. 16A and FIG. 16B respectively;

FIG. 17A shows a chart of signal amplitude values of locator signals received at the reader assembly from resonators of the resonator assembly during the third time of the parking scenario depicted in FIG. 11, each resonator having a corresponding transmission time slot according to their position in the resonator assembly; FIG. 17B shows a chart depicting the time slots of each resonator of the resonator assembly; and FIG. 17C and FIG. 17D each depict a close up view of the charts of FIG. 17A and FIG. 17B respectively;

FIG. 18 shows an alternative example of the positioning system of FIG. 11 representing a different example vehicle parking scenario depicting the position of a reader assembly of a vehicle relative to a resonator assembly at three different times during the parking scenario;

FIG. 19A shows a positional heatmap of signal amplitude values of locator signals received at the reader assembly from resonators of the resonator assembly at the third time during the parking scenario depicted in FIG. 18, and FIG. 19B shows a chart of the signal amplitude values corresponding to each resonator of the resonator assembly at the third time;

FIG. 20A shows a chart of signal amplitude values of locator signals received at the reader assembly from resonators of the resonator assembly during the third time of the parking scenario depicted in FIG. 18, each resonator having a corresponding transmission time slot according to their position in the resonator assembly; FIG. 20B shows a chart depicting the time slots of each resonator of the resonator assembly; and FIG. 20C and FIG. 20D each depict a close up view of the charts of FIG. 20A and FIG. 20B respectively;

FIG. 21A depicts a top down view of an example reader assembly comprising two readers spatially distributed therein, the reader assembly positioned at a rotation angle such as that which may be observed in the parking scenario of FIG. 11; and FIG 21B depicts data clouds obtained from each of the readers of the reader assembly relative to the resonator assembly, the data clouds suitable for use in determining the rotation angle;

FIG. 22A shows a positional heatmap of signal amplitude values of locator signals received at a reader assembly from resonators of a resonator assembly, when the reader assembly is positioned at an x,y position and a first height or z-distance from the resonator assembly; and FIG. 22B shows a further such positional heatmap when the reader assembly is positioned at the same x,y position of FIG. 22A, and at a second height or z-distance, greater than the first height or z-distance;

FIG. 23 shows an alternate example positioning system in accordance with the present disclosure including an alternate arrangement of resonators;

FIG. 24 shows a further alternate example positioning system in accordance with the present disclosure including a further alternate arrangement of resonators;

FIG. 25 depicts steps of a method for determining the position of a vehicle-based wireless power transfer apparatus relative to a ground-based wireless power transfer apparatus in accordance with the present disclosure; and

FIG. 26 depicts further steps of an example method for determining the position of a vehicle-based wireless power transfer apparatus relative to a ground-based wireless power transfer apparatus in accordance with the present disclosure.

DETAILED DESCRIPTION

Wireless inductive charging of electric vehicles (EV) may provide numerous benefits such as improved convenience, safety, and reliability. It eliminates cabling that is often impedimental for pedestrians and prone for wear out, vandalism, and pollution. It can preserve urban aesthetics without compromising functionality and provide a suitable solution for autonomous parking. It may increase availability of parked vehicles for vehicle-to-grid (V2G) power transfer e.g., to stabilize the electricity grid as the demand for fluctuating renewable energy increases. In the context of the present disclosure an EV may be any appropriate type of vehicle, such as a car, a motorcycle, a golf cart, a scooter, a marine vessel, an aircraft, etc. Further, the term "EV" is understood to include any type of EV, such as a battery electric vehicle (BEV), a hybrid electric vehicle (HEV), a plug-in hybrid electric vehicle (PHEV), a fuel cell electric vehicle (FCEV). Generally, the charging referred to herein is in relation to a traction battery of an EV, e.g., a battery configured to supply power to an electrified powertrain of the EV. However, where technically feasible, the disclosure extends (alternatively or additionally) to charging an ancillary battery of a vehicle, e.g., a battery of a vehicle configured to power an ancillary system or peripheral device of a vehicle, such as a power take-off device of a vehicle.

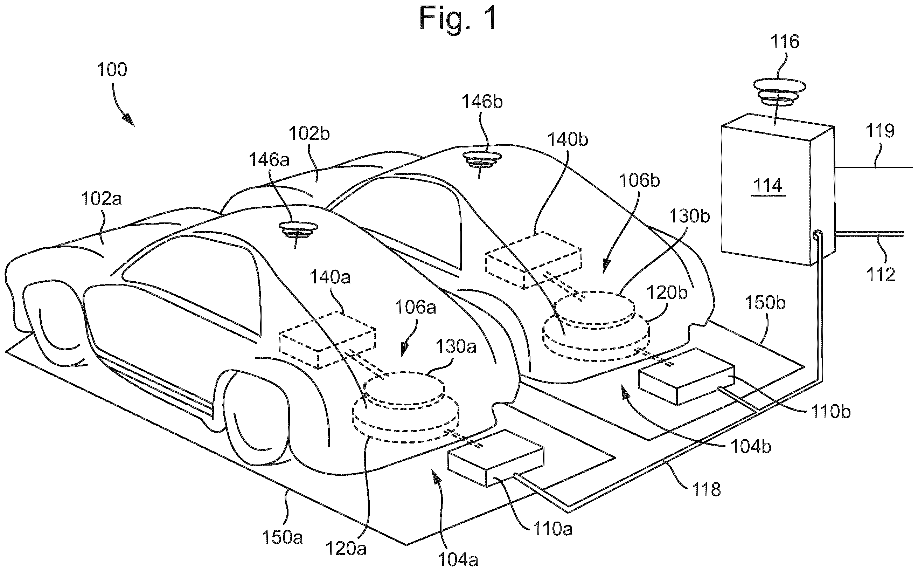

FIG. 1 illustrates an example of a parking facility 100 providing wireless charging services. Two wireless charging-enabled vehicles, 102a, 102b integrating WPT vehicle units 130a, 130b are each parked over a WPT ground unit, 120a, 120b. Both vehicle unit and ground unit include a WPT coil (not shown) sometimes also referred to as an induction coil configured to wirelessly transfer power based on the Faraday induction principle. Both vehicle unit and ground unit are part of a vehicle assembly (VA) and a ground assembly (GA) respectively, which also include respective portions of a position detection system as described herein. In particular the ground unit 120a, 120b includes a ground-based resonator housing 150a, 150b comprising a plurality of passive resonators, as detailed below, distributed over a position monitoring region therein and configured to transmit a respective locator signal upon excitation by an interrogation signal transmitted by a receiver (not shown) integrated into the vehicle unit 130a, 130b. In some implementations, the ground units are surface mounted on the ground or the floor of a parking facility. In other implementations, the ground units are flush mounted in the floor or buried in the ground (e.g., in the asphalt).

In the example shown in FIG. 1, the power converters 110a, 110b convert power received by WPT vehicle units 130a, 130b to a form suitable for charging the vehicle's traction battery (not shown). In some examples and as described in U.S. Patent US 9,561,730 B2, the power converters 140a, 140b may be integrated with power converters used for plug-in charging of the vehicle, commonly called on-board chargers (OBC), or other on-board vehicle components. The WPT ground units 120a, 120b are shown linked to external power converters 110a, 110b, each connected to a power supply bus 118. In some implementations, the power converters 110a, 110b are configured and mounted as a "wall box". In other implementations, the power converters or parts thereof are integrated into the WPT ground units. The power supply bus 118 is in turn connected to a central power distribution unit 114. In some implementations and operations, the central power distribution unit receives power from a power utility 112 sometimes referred to as "power grid" and provides DC power to the bus 118, and the power converters 110a, 110b are inverters, such as the multi-level inverter described in U.S. Patent Application 18/486,830, filed October 13, 2023, and incorporated here by reference. The power converters 110a, 110b, provide low-frequency (LF) power signals, such as the 85 kHz signals used for WPT according to the SAE J2954 standard, to the WPT ground units 120a, 120b, to turn into LF magnetic fields for WPT. In other examples, the power distribution unit 114 provides the LF signals directly to each WPT ground unit, and power converters 110a, 110b are simpler or not present.

In yet other examples, the power distribution unit 114 and bus 118 are not present, and the power converters 110a, 110b are each connected directly to the power utility 112 and convert AC power from the utility to LF power for wireless power transfer. The combination of a WPT ground unit (e.g., 120a), a power converter (e.g., 110a), and any other ground-side electronics (not shown) constitutes a wireless charging station (e.g., 104a) as indicated in FIG. 1. In some cases, the WPT ground units 120a, 120b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 130a, 130b are sometimes referred to as Vehicle Assembly Resonators (VAR) or vehicle assembly pads and the combination of a WPT vehicle unit (e.g., 130a) and a power converter (e.g., 140a) and any other vehicle-side electronics (not shown) constitutes a Vehicle Assembly (VA) (e.g., 106a). Each of the power connections shown may be bi-directional, allowing the vehicles to discharge power from their batteries to the power utility 112 in a vehicle-to-grid (V2G), or other load in a vehicle-to-home (V2H), vehicle-to-vehicle (V2V) or similar arrangement (generally V2X).

FIG. 1 illustrates vehicles 102a, 102b, and power distribution unit 114 providing wireless communication units 146a, 146b, and 116, respectively. The wireless communication unit 116 may be configured to wirelessly communicate with the vehicles 102a and 102b e.g., based on a WiFi IEEE 802.11x standard. In SAE standard conformant wireless charging systems, this communication is used for exchanging data between the GA and VA for purposes of WPT control and safety. Further, the power distribution unit 114 provides an interface 119 configured to communicate with external entities (e.g., a charging operation center) via a communication backhaul (not shown). This backhaul may rely on radio communications (e.g., via communication unit 116), power line communications (e.g., via power utility 112), or any other line communications including fiber optic. In the example parking facility 100, wireless communication unit 116 is configured to serve multiple vehicles. In other parking facilities, each of the wireless charging stations 104a, 104b provide a wireless communication unit (not shown) configured to communicate with the respective vehicles 102a, 102b.

Beside the WPT coil, the WPT ground units 120a, 120b or the WPT vehicle units 130a, 130b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

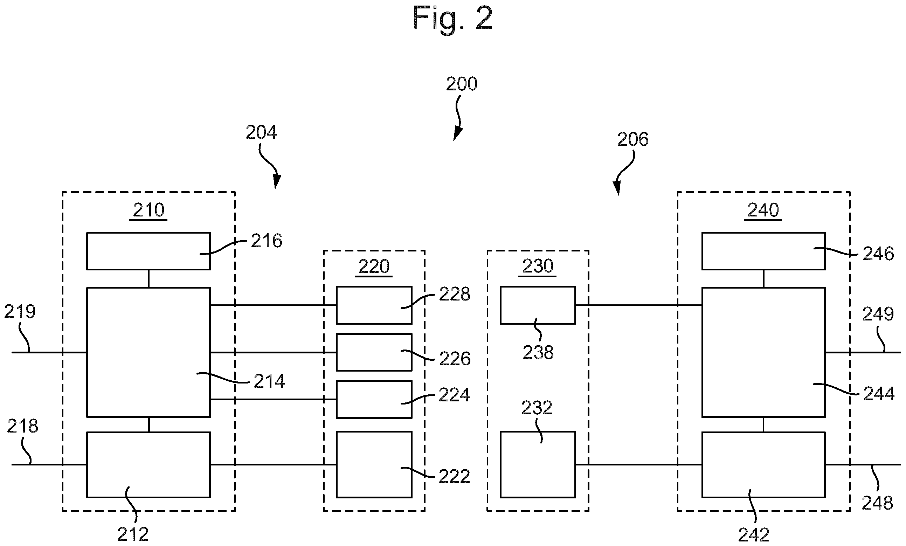

FIG. 2 is a hierarchical block diagram of an example WPT system 200 for wireless electric vehicle charging. At the top hierarchy level, the system 200 comprises a GA 204 and a VA 206 that may refer to the wireless charging station 104a and the VA 106a, respectively, of FIG. 1. The next lower level shows the GA 204 composed of a GA power conversion and control unit 210 and a WPT ground unit 220 (e.g., 120a of FIG. 1) and various connections between these blocks. Splitting the GA into two blocks implies implementations where the GA power conversion and control unit and the ground unit are physically separated (as illustrated in FIG. 1) and interconnected via a several meters long multiwire cable referred to herein as GA feeder cable (not shown). However, it should not exclude implementations where the GA power conversion and control unit is entirely or partially integrated in the ground unit forming one physical unit with a common housing (not shown).

At the third level, the GA power conversion and control unit includes a GA power converter 212 (e.g., 110a of FIG. 1), a GA controller 214, and a GA wireless communication unit 216 (e.g., 132a of FIG. 1). The ground unit 220 integrates a GA WPT coil 222 as well as various functions as needed for Foreign Object Detection (FOD), Living Object Detection (LOD), Vehicle Detection (VD), and Position Detection (PD) as previously discussed with reference to FIG. 1. In the example of FIG. 2, these functions are provided by a FOD unit 224, a LOD unit 226, and a GA PD unit 228, each configured and connected to the GA controller for exchanging data and control. In some implementations, these functions share or partially share one common hardware platform referred to as a multi-purpose detection system.

In an implementation conforming with the SAE standard, the GA wireless communication unit 216 is a WiFi Access Point providing an air interface to a Wireless Local Area Network (WLAN) of a parking facility. Certain parking facilities (e.g., parking facility 100 of FIG. 1) provide a central WiFi access point associated to multiple GAs. In such implementations, the GA wireless communication unit 216 is external to the GA 204. In another implementation, the GA wireless communication unit is integral part of the ground unit 220.

The GA WPT coil 222 may include a tuning and impedance matching network (not shown) forming a resonant circuit and the ground-unit is referred to as the GAR as previously mentioned. In other implementations, the tuning and impedance matching network or parts thereof are included in the GA power converter 212. Further, the GA controller 214 interfaces to the GA power converter 212 and the GA wireless communication unit 216 for data exchange and system control. It also provides a data interface 219 (e.g., Ethernet) to communicate with a system external entity e.g., via a backbone network as mentioned with reference to FIG. 1. Moreover, the GA power converter 212 disposes a power interface 218 for feeding or receiving AC or DC power as discussed with reference to FIG. 1.

At the second level, FIG. 2 shows the VA 206 composed of a WPT vehicle unit 230 (e.g., 106a, 106b of FIG. 1) connected to a VA power conversion and control unit 240. At a third level, the VA power conversion and control unit 240 comprises a VA power converter 242 (e.g., 110a of FIG. 1), a VA controller 244, and a VA wireless communication unit 246 (e.g., 132a of FIG. 1). The vehicle unit 230 comprises a VA WPT coil 232 and a VA PD unit 238, the vehicle-side counterpart of the GA PD unit 228 interfacing with the VA controller for data exchange and control. Splitting the VA into two blocks implies implementations where the VA power conversion and control unit and the vehicle unit are physically separated (as illustrated in FIG. 1) and interconnected via a multiwire cable referred to herein as VA feeder cable (not shown). However, this should not exclude implementations where the VA power conversion and control unit 240 is entirely or partially integrated in the vehicle unit 230 forming one physical unit with a common housing (not shown).

In a standard conforming implementation, the VA wireless communication unit 246 is a WiFi Client. As with the GA wireless communication unit, the VA wireless communication unit may be external to the VA 206 e.g., mounted anywhere on the vehicle or parts or it may be partially or fully integrated into the vehicle unit.

In some implementations, the VA WPT coil 232 includes a tuning and impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 249, e.g., a CAN bus interface to communicate with an external vehicle onboard entity. Moreover, the VA power converter disposes a power interface 248 for feeding or receiving DC power as previously discussed with reference to FIG. 1.

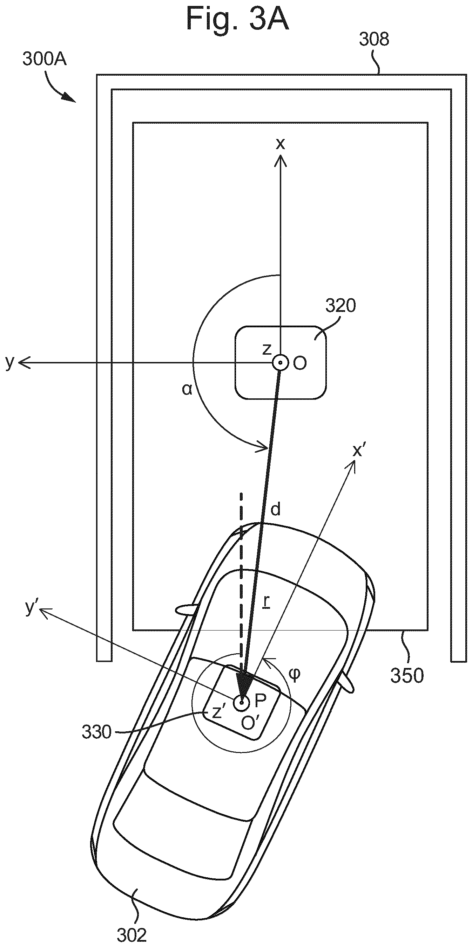

FIG. 3A shows an example parking space and a parking scenario 300A illustrating a positional relationship between a vehicle unit 330 (e.g., 106a, 106b of FIG. 1 or 230 of FIG. 2) and a ground unit 320 (e.g., 104a of FIG. 1 or 220 of FIG. 2) as it may be needed for guidance, alignment, and pairing. The ground unit 320 of FIG. 3A includes a ground-based resonator housing 350 of a GA substantially as described herein, for example in relation to the ground-based resonator housing 150a, 150b of FIG. 1. FIG. 3A represents the positional relationship in a ground-based coordinate system defined by perpendicular x- y-, and z-axes and having its origin O in the ground unit 320. The x- and y-axes (also referred to as the horizontal axes) span a parallel plane to a parking space defined by road markings 308. The z-axis (vertical axis) points towards the zenith assuming a right-hand oriented coordinate system. The x-axis is aligned in parallel to a longitudinal axis of the parking space pointing towards the rear of the parking space.

The vehicle unit 330 mounted on a vehicle 302 may also be associated with a vehicle-based coordinate system defined by perpendicular x'-, y'-, and z'-axes and having its origin O' in the vehicle unit. The x'- and y'-axes span a plane substantially parallel to the parking space, depending on a tilt of the vehicle-unit relative to the floor, while the z'-axis essentially points towards the zenith assuming a right-hand oriented coordinate system. The x'-axis is assumed aligned with a longitudinal axis of the vehicle pointing in driving direction.

The origins O and O' may correspond to a magnetic center point of the ground unit and the vehicle unit, respectively, which may be at the geometrical center of each. In other examples, the magnetic center may be as explained in U.S. Patent 11,394,253. In some implementations, the vertical coordinate (e.g., z or z') is omitted in a positional relationship as needed for purposes of guidance and alignment. However, it may be used in a process of determining a positional relationship e.g., if a z-height of the vehicle unit 330 matters.

In a ground-based coordinate system omitting z, the positional relationship between the vehicle unit 330 and the ground unit 320 may be defined by the position of the origin O' also denoted P and an angle of rotation $\phi$ measured from the dashed line parallel to the x-axis as indicated in FIG. 3A. Using Cartesian coordinates, the position P may be represented by a vector r = $(x_p, y_p)$. In a polar representation, P may be defined by a distance d = square root of $(x_p^2 + y_p^2)$ and an angle $\alpha$ = arctan $(y_p/x_p)$ measured from the x-axis. The angle $\phi$ is also referred herein as the vehicle rotation relative to the parking space. The position P and angle $\phi$ are also referred herein as the pose of the vehicle unit or simply, the pose of the vehicle.

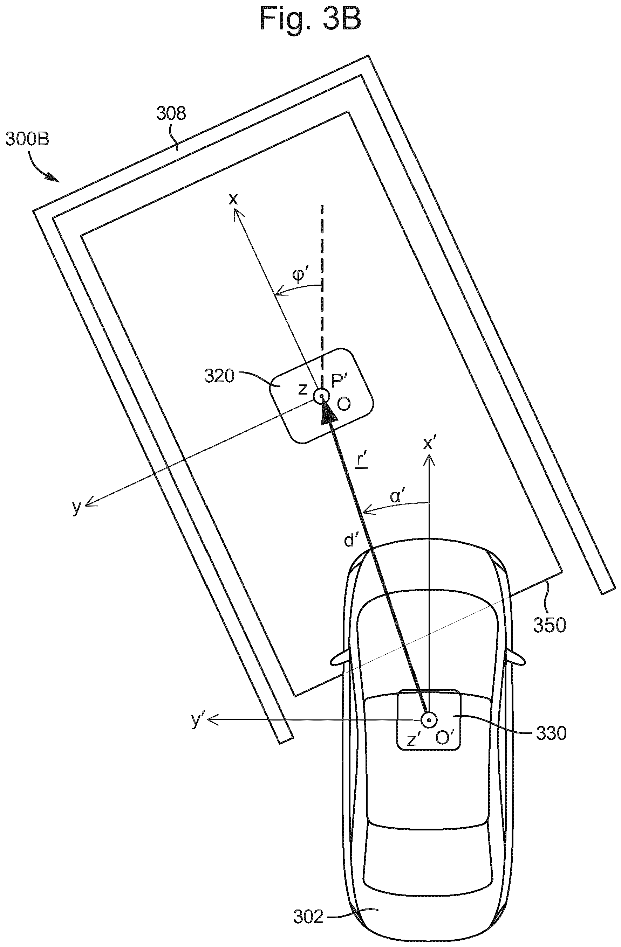

FIG. 3B shows an example parking space and a parking scenario 300B illustrating another positional relationship between a ground unit 320 (e.g., 104a of FIG. 1) comprising a ground-based resonator housing 350 of the GA PD, and a vehicle unit 330 (e.g., 106a, 106b of FIG. 1) as it may be needed for guidance, alignment, and pairing. FIG. 3B represents this positional relationship in a vehicle-based coordinate system defined by perpendicular x'-, y'-, and z'-axes and having its origin O' as described above with reference to FIG. 3A.

The ground unit 320 is associated with the ground-based coordinate system defined by perpendicular x-, y-, and z-axes and having its origin O in the ground unit and aligned with road markings 308 as described above with reference to FIG. 3A. In the vehicle-based coordinate system omitting z', the positional relationship between the ground unit 320 and the vehicle unit 330 may be defined by the position of the origin O also denoted P' and an angle of rotation $\phi$' measured from the dashed line parallel to the x'-axis as indicated in FIG. 3B. Using Cartesian coordinates, the position P' may be represented by a vector $\underline{r}$' = $(x_p', y_p')$. In a polar representation, P' may be defined by a distance d' = square root of $(x_p'^2 + y_p'^2)$ and an angle $\alpha$' = arctan $(y_p'/x_p')$ measured from the x-axis. The angle $\phi$' is also referred herein as the rotation of the ground unit relative to the vehicle. While the distances d' and d are identical, the angles $\alpha$' and $\alpha$ generally differ. The position P' and angle $\phi$' are also referred herein as the pose of the ground-unit or simply, the pose of the parking space.

In some implementations of a guidance and alignment system e.g., using a graphical user interface (GUI) abord the vehicle, the pose of the vehicle unit is represented in a ground-based coordinate system. In other implementations, the pose of the ground unit is displayed in a vehicle-based coordinate system. Various implementations of the vehicle onboard GUI are disclosed in U.S. Patent 9,971,353 incorporated herein as reference. In an example implementation of a guidance and alignment system, the pose of the vehicle unit 330 is determined in a ground-based coordinate system and then mathematically transformed into the pose of the ground-unit 320 as described in U.S. Patent 10,343,537 incorporated herein as reference.

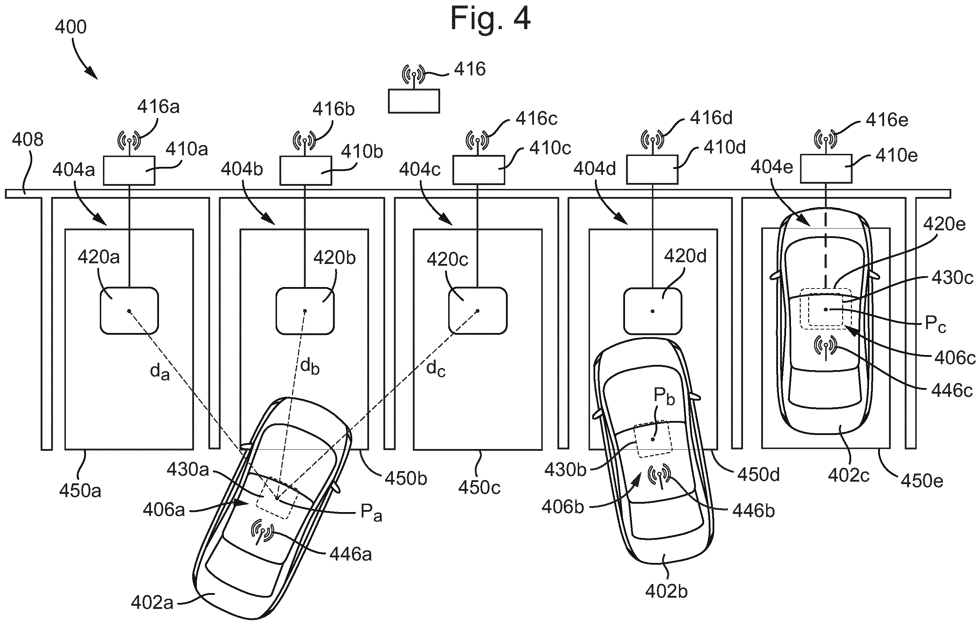

FIG. 4 shows a parking facility 400 illustrating an example multiple parking space scenario with multiple vehicles 402a, 402b, 402c. Parking spaces are outlined by road markings 408. Parking spaces are equipped with wireless charging stations (GAs) referring to GAs 404a, 404b, 404c, 404d, 404e. The plurality of GAs is sometimes also referred to as ground infrastructure. The GAs include respective WPT ground units 420a, 420b, 420c, 420d, 420e suitably positioned in the parking spaces and connected to respective GA power conversion and control units 410a, 410b, 410c, 410d, 410e implemented in some examples as "wall boxes" as described with reference to FIG. 2. Further, each ground unit integrates a GA PD unit (e.g., GA PD unit 228 of FIG. 2, represented in the example shown as respective GA PD ground-based resonator housings 450a, 450b, 450c, 450d, 450e) configured to interact with a vehicle-side reader assembly counterpart for determining a positional relationship as described herein. Moreover, the GAs provide a respective GA wireless communication unit 416a, 416b, 416c, 416d, 416e configured to communicate with vehicles (e.g., 402a, 402b, 402c). FIG. 4 also shows a central GA wireless communication unit 416 (e.g., 116 of FIG. 1) as part of the ground infrastructure connected to each of the GAs (connections not shown). In some implementations, the central communication unit is configured as a communication node of a backbone network (not shown). In other implementations, it is configured to communicate with vehicles (e.g., 402a, 402b, 402c).

Further, FIG. 4 indicates that the vehicles 402a, 402b, 402c are equipped with VAs 406a, 406b, 406c. The VAs include respective WPT vehicle units 430a, 430b, 430c suitably mounted on the vehicles and connected to respective VA power conversion and control units (e.g., 240 of FIG. 2, not shown) as described with reference to FIG. 2. Further, each vehicle unit integrates a VA PD reader assembly unit (e.g., VA PD unit 238 of FIG. 2, not shown) configured to interact with the ground-side counterpart (which in the example shown includes GA PD ground-based resonator housings 450a, 450b, 450c, 450d, 450e) for determining the positional relationship as described herein. Moreover, the VAs provide a respective VA wireless communication unit 446a, 446b, 446c configured to communicate with any of the GA wireless communication units (e.g., 416a, 416b, 416c, 416d, 416e).

In another aspect, FIG. 4 displays the vehicles 402a and 402b heading towards the ground unit 420b and 420d, respectively, and vehicle 402c parked over the ground unit 430e e.g., for charging. From the perspective of the vehicle 402a, the ground unit 420b is also referred herein to as the target ground unit and the GA 404b as the target GA. From the perspective of the ground unit 420b, the vehicle 402a is also referred to as the vehicle attempting to be charged. Likewise, the GA 404d and its ground unit 420d are referred to as the target GA and the target ground unit, respectively, of the vehicle 402b, which in turn may also be referred to as the vehicle attempting for being charged from GA 404d.

As mentioned with reference to FIG. 1, standard compliant WPT for electric vehicles requires wireless communications between a target GA (e.g., GA 404b) and a vehicle (e.g., 402a). In a multiple parking space multiple vehicle scenario such as illustrated in FIG. 4 by example, it is necessary to assure that the VA (e.g., 406a) is actually communicating with the target GA (e.g., 404b), and not another neighboring GA (e.g., 404d). The VA may establish wireless network communications with a GA of an adjacent parking space, falsely determining that it has established communication with its target GA. When the VA requests power and does not receive it (because it is in communication with the wrong GA), the VA may not detect the source of the problem. Likewise, the GA of the adjacent parking space may detect a fault because it is attempting to provide power and recognizing no load. This problem may be referred to as "cross-connect." In addition to the primary function of providing power to a vehicle being impossible in a cross-connect situation, additional functions such as PD for guidance and alignment, FOD, and LOD may not operate properly, if at all, when wireless communications are not established between the VA and its target GA.

As previously mentioned, guidance, alignment, and pairing in the example multiple parking space scenario illustrated in FIG. 4 requires the VA (e.g., VA 406a) to disambiguate between the target GA (e.g., GA 404b) and neighboring GAs (e.g., 404a, 404c, 404d, 404e). Pairing for wireless communications (e.g., via WiFi) additionally requires the VA to disambiguate between the GA wireless communication unit (e.g., 446b) associated to the target GA and the GA wireless communication units associated to neighboring GAs. Alternatively, it requires the GA (e.g., 104b) to disambiguate the vehicle (e.g., 402a), attempting for being charged from, from other vehicles (e.g., 402a, 402c) as well as the associated VA wireless communication unit (e.g., 446a) from the VA communication units associated to other vehicles.

Moreover, guidance and alignment may require PD to periodically determine a positional relationship between the vehicle unit (e.g., 430a) and the ground unit (e.g., 420b) in a suitable coordinate system, at a suitable update rate, and over a suitable distance range. In some implementations, the vehicle (e.g., 402a) receives 10 position updates per second for guidance beginning at a distance of 5 m and in a vehicle-based coordinate system with reference to FIG. 3B. At a distance of 1 m, the update rate is increased e.g., to 20 updates per second for alignment.

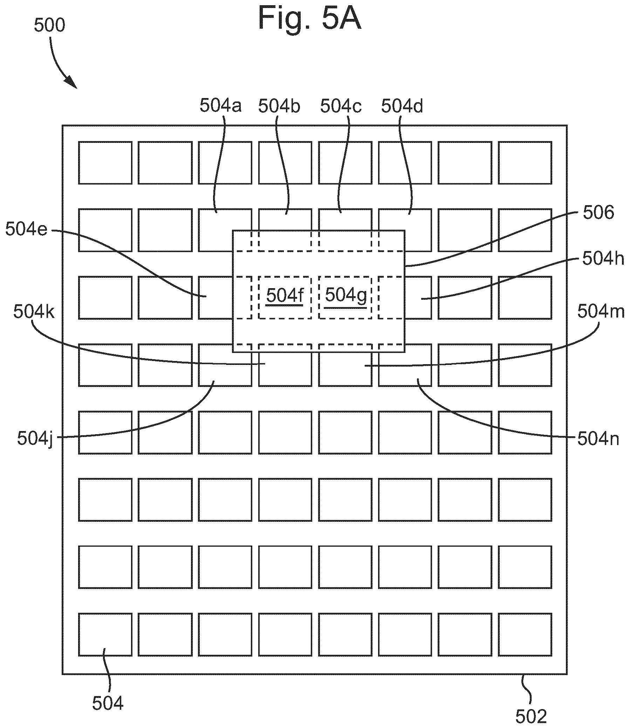

FIG. 5A depicts a specific example PD system 500 in accordance with a first aspect of the present systems and methods. The GA PD 228 of the PD system 500 comprises a ground-based resonator housing 502, which may for example be ground-based resonator housing 150a, 150b, ground-based resonator housing 350, or ground-based resonator housing 450a, 450b, 450c, 450d, 450e, or may be integrated within GA PD unit 228. The ground-based resonator housing 502 houses a resonator assembly comprising a plurality of passive resonators 504. A peripheral edge of the rectangular ground-based resonator housing 502 defines a position monitoring region of the resonator assembly, the plurality of resonators 504 distributed within the position monitoring region in an 8 x 8 array. PD system 500 further comprises a reader assembly 506 which, in the example shown, is comprised within a vehicle unit (see, for example, vehicle unit 130, 230 which comprises VA PD 238, 330, 430) of a vehicle (not shown), the reader assembly 506 positionable relative to the resonator assembly comprising the plurality of resonators 502 as the vehicle moves to park in a parking space comprising the ground-based resonator housing 502, such as that described in relation to FIG. 1, FIG. 3A, FIG. 3B and FIG. 4. Each passive resonator 504 comprises a resonant circuit configured to transmit a locator signal to the reader assembly 506 (for example in response to receipt of an interrogation signal from the reader assembly 506), the reader assembly 506 comprising a receiver configured to receive the locator signal. The resonant circuit of each passive resonator 504 is configured to transmit a respective locator signal having a signal amplitude and a corresponding unique locator signal characteristic, the unique locator signal characteristic associated with the unique location of the passive resonator in the 8 x 8 array of the plurality of passive resonators 502 within the position monitoring region. The resonators 504 of the plurality of resonators 504 each have a known absolute position within the 8 x 8 array, corresponding to an x, y coordinate within the position monitoring region. The reader assembly 506 is further in communication with a processor (which may for example be a dedicated VA PD controller, or may be, for example, VA controller 240) which, following receipt of the locator signals from passive resonators 504 within the 8 x 8 array by the receiver, is configured to process a distribution of the received locator signals, to determine a position of the reader assembly 506 relative to the resonator assembly of the ground-based resonator housing 502. The determination of the relative position from the signal distribution is performed based on the signal amplitude of the received locator signals and the unique locator signal characteristic of the received locator signals. While the example shown in FIG. 5A illustrates an 8 x 8 array of resonators, the system and methods disclosed herein may be implemented using any appropriately sized array, e.g., a 3 x 3 array or a 20 x 20 array. Further, in some examples the plurality of resonators may be spaced in a non-uniform manner, or in a pattern other than the array illustrated in FIG. 5A.

In the specific example 500 shown, the receiver circuitry of the reader assembly 506 includes a signal generator, an amplifier, and a transmission antenna. The signal generator produces the interrogation signal at a predetermined carrier frequency, which is then amplified and transmitted via the transmission antenna. Upon reaching a resonator 504 of the plurality of resonators 504, the interrogation signal induces a current, thereby exciting the resonator circuit. The circuitry of the resonator 504 can, for example, comprise an inductor and a capacitor, which can together define a resonant frequency of the resonator 504.

Each passive resonator 504 responds to the carrier frequency of the interrogation signal, which is transmitted by the receiver of the reader assembly 506. When the carrier frequency of the interrogation signal generated by the receiver is in close proximity to, or matches, the resonant frequency of the resonator, maximum efficiency of energy transfer from the interrogation signal to the resonator may be achieved. At the resonant frequency, the impedance of the resonator is minimized, allowing for the most efficient coupling of the electromagnetic energy from the interrogation signal to the resonator circuit.

As the interrogation signal energizes the resonator 504, the resonator 504 enters into resonance, causing it to oscillate and store energy within its electromagnetic field. Incorporated within the circuitry of each resonator 504 is a corresponding modulation circuit which is configured to impose a modulation frequency onto the resonant oscillation. This modulation is a result of the periodic variation in the capacitance or inductance of the resonator 504, effectively encoding the modulation frequency onto the interrogation signal. The modulation can in some examples be either encoded via shortening, opening of the resonance circuit by way of the associated integrated circuit, or by way of impedance modulation of the resonance frequency by modulating impedance (including inductance, capacitance, resistance components thereof) of the resonator. In the specific example 500 shown, each resonator 504 of the plurality of resonators 504 comprises a corresponding unique modulation frequency, such that each modulation frequency corresponds to the location of the corresponding resonator 504 in the 8 x 8 array. The modulation frequency of each resonator 504 thereby encodes a unique locator signal characteristic onto the interrogation signal corresponding to the location of the resonator 504 in the 8x8 array.

The oscillating resonator, carrying both the resonant frequency (equal to the carrier frequency of the interrogation signal) and the corresponding modulation frequency of the resonator, re-radiates (by reflection or backscatter) this combined signal as the locator signal. This re-radiated locator signal comprises an amplitude-modulated (AM) wave comprising the carrier frequency and the modulation frequency. The transmission antenna of the receiver captures the locator signal and couples it into the receiver circuitry. Within the receiver, the incoming signal may first be filtered by a bandpass filter centered around the carrier frequency to reduce any unwanted out-of-band signal components as described herein. The received locator signal, for example the filtered signal, is then demodulated, and the demodulated signal is then processed by an analogue-to-digital converter (ADC) for digital analysis. A digital signal processing (DSP) unit within the receiver analyzes the extracted modulation frequency and decodes information encoded in the modulation pattern. For example, the amplitude modulation at the unique modulation frequency may provide specific sidebands around the carrier frequency, which may be spaced according to the modulation frequency. In this particular example, the combination of the sideband position and their spectral amplitude carry the encoded location and position data from the resonator back to the receiver.

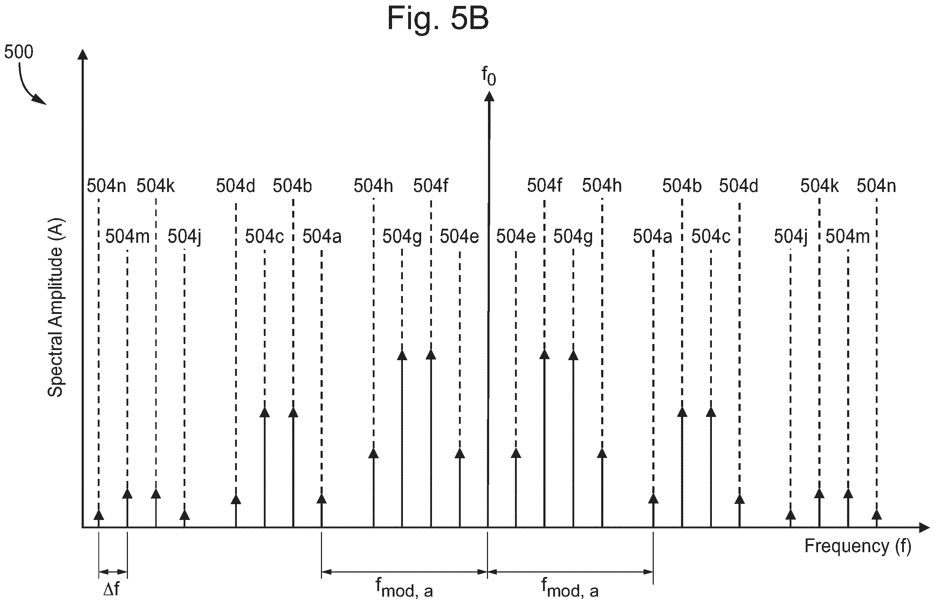

. When the carrier frequency matches, or is in close proximity to, the resonant frequency of the resonator, resultant strong oscillations in the resonator may produce a robust locator signal. Maximum efficiency of energy transfer from the interrogation signal to the resonator may therefore be achieved. At the resonant frequency, the impedance of the resonator is minimized, allowing for the most efficient coupling of the electromagnetic energy from the interrogation signal to the resonator circuit. This locator signal comprises a combination of the carrier frequency and the modulation frequency. The resultant amplitude modulation exhibited by the locator signal thereby corresponds to the unique location of the resonator within the positioning monitoring region. When a particular resonator 504 of the plurality of resonators 504 is further from the receiver of the reader assembly 506, the interrogation signal experiences weaker coupling, and the resultant locator signal also experiences further signal decay on a return path to the receiver. This path can itself encode the positional relationship between the receiver and the resonator onto the signal amplitude of the locator signal. In some examples, the height of the reader can therefore also be estimated. Conversely, when the resonator 504 is close to the receiver of the reader assembly 506, coupling is improved, preserving the signal amplitude of both the incoming and outgoing signals, and thereby again encoding the positional relationship between the receiver and the resonator onto the signal amplitude of the locator signal. The combined encoding of: the resonator location within the 8 x 8 array (which in the example shown is performed by way of a unique modulation frequency of each resonator 504), and the positional relationship between the receiver and the resonator 504 (by way of the signal amplitude of the locator signal), thereby enables the determination of the position of the reader assembly 506 relative to the resonator assembly of the ground-based resonator housing 502. The close matching of the carrier frequency of the interrogator signal with the resonant frequency of the resonator, and resultant efficiency in locator signal generation and reflection, may optimize the strength of the locator signal for effective demodulation and subsequent processing, and therefore optimal detection of the unique locator signal characteristic for position determination. In the specific example shown, the reader assembly 506 of the vehicle can be observed to be positioned over twelve resonators 504a-n, of the ground-based resonator housing 502, the respective locations of the twelve resonators 504a-n being represented in the resulting locator signal distribution processed by the reader, as shown in FIG. 5B.

In the specific example 500 shown the resonator frequency of the resonators 504 and the carrier frequency of the interrogation signal is 120kHz. Examples will be appreciated wherein the resonator frequency and carrier frequency can be any suitable frequency, and in view of the examples described herein may be any suitable frequency greater than or equal to approximately 90kHz, to provide minimal or no response in the range of the low-frequency power signals (85 kHz) used for WPT according to the SAE J2954 standard. The resonator frequency and the carrier frequency may for example be selected from between 90 kHz and 150kHz. The receiver of the reader assembly monitors for reflection of the locator signals over a predetermined frequency band, which in the specific example shown is determined by the bandwidth occupied by the modulation frequencies of the resonators 504 within the resonator assembly. Any suitable combination of unique modulation frequencies will be appreciated, and in the specific example 500 shown, the resonators 504 each comprise a respective modulation frequency which spans a bandwidth of 6.3 kHz, with each successive resonator 504 in the 8 x 8 array comprising a modulation frequency difference ($\Delta f$) compared to the previous resonator in the array, the modulation frequency difference ($\Delta f$) in the example 500 shown being 100 Hz (as can be observed in the locator signal distribution of FIG. 5B). Since there are a total of 64 resonators 504 in the 8 x 8 array, this modulation frequency difference ($\Delta f$) of 100 Hz results in the modulation frequency bandwidth of 6.3 kHz.

By processing the distribution of the reflected locator signals, the DSP of the receiver can extract spectral information for determining the relative position of the reader assembly to the resonator assembly as described. By knowing the absolute position of each resonator by way of the known x,y coordinate discussed, the DSP of the receiver can determine from the relative position, the absolute position of the reader assembly in space. By way of example, the processor may use the following formulae to determine the position of the reader assembly relative to the resonator assembly in the form of an *x, y* coordinate:

$$x = \frac{\sum_i A_{mod,i} x_i}{\sum_i A_{mod,i}}, \text{ and } y = \frac{\sum_i A_{mod,i} y_i}{\sum_i A_{mod,i}},$$

wherein $x_i$ and $y_i$ are respective coordinates of each resonator i, inferred from the unique locator signal characteristic of the respective locator signal, which in the example described is a unique modulation frequency; and wherein $A_{mod,i}$ is the modulated signal amplitude of the locator signal for resonator i.

FIG. 5B depicts an example locator signal distribution received by the receiver of the reader assembly 506 in the example 500 depicted in FIG. 5A, showing a plot 550 of locator signal frequency (f) against locator signal spectral amplitude (A). The received locator signals comprise the carrier frequency ($f_0$) of the interrogation signal transmitted by the receiver, and a corresponding modulation frequency component specific to a unique modulation frequency ($f_{mod}$) of each of the twelve resonators 504a-n. In particular, from the plot 550, modulation frequency-specific sidebands can be observed positioned about the central carrier frequency ($f_0$). The central peak represents the carrier frequency ($f_0$), observed to be the most prominent peak in the distribution due to the direct reflection of the unmodulated part of the interrogation signal by the resonators 504a-n.

Adjacent to this central peak ($f_0$), are pairs of sidebands symmetrically distributed at intervals defined by the corresponding modulation frequency ($f_{mod}$). These sidebands result from the described amplitude modulation process, wherein the altered impedance of a resonator encodes the unique modulation frequency onto the carrier frequency. Each pair of sidebands appears at frequencies equal to the carrier frequency ($f_0$) plus and minus the corresponding modulation frequency ($f_{mod}$). For example the respective locator signal sidebands of the first of the twelve resonators 504a are shown distanced from the carrier frequency ($f_0$) by the unique modulation frequency $f_{mod,a}$ of the resonator 504a. The presence and position of the sidebands shown in FIG. 5B are directly associated with the location of the resonator 504a-n from which they originate.

The spectral amplitude (A) of these sideband pairs relative to the carrier frequency ($f_0$) peak can be seen in the plot 600 to vary. In all cases the spectral amplitude (A) of the sideband pairs is lower than that of the carrier frequency ($f_0$) peak because they represent interrogation signal energy which was redistributed by the resonator from the carrier frequency to encode the modulation frequency ($f_{mod}$) thereon. The exact amplitude of these sidebands can also provide an indicator of proximity of the corresponding resonator 504 to the receiver as discussed herein, such that a larger observed spectral amplitude correlates with a more closely proximate resonator to the receiver.

The distance between successive sideband pairs and the carrier frequency ($f_0$) peak correlates directly with the modulation frequency ($f_{mod}$). A higher modulation frequency would place the corresponding sideband pairs farther away from the central carrier frequency ($f_0$) peak, whereas a lower modulation frequency ($f_{mod}$) results in sideband pairs closer to the carrier frequency ($f_0$) peak. The spread of these sideband pairs relative to the carrier frequency ($f_0$) peak thereby repre-

sents the bandwidth occupied by the modulation frequencies ($f_{mod}$) of the resonators 504, driven by the modulation frequency difference ($\Delta f$) between the neighboring resonators as discussed.

As can be seen in the example 500 of FIG. 5A, two resonators 504f, 504g of the twelve resonators 504a-n, are entirely covered by the reader assembly 506 of the vehicle. As can be seen in the resulting plot 550 of FIG. 5B, these two covered resonators 504f, 504g reflect locator signals having the strongest respective signal amplitudes due to their closest proximity to the reader assembly. Corresponding peaks are observed from the remaining ten resonators 504a-e, 504h-n in accordance with their respective modulation frequencies and their respective proximities to the reader assembly 506, as shown.

In practical terms, the clarity and distinction of these sidebands, as seen on a spectral plot such as that shown in FIG. 5B, can aid an ability of the receiver to effectively demodulate and decode the transmitted locator signals accurately, thereby optimizing accuracy in determining the relative position of the reader assembly to the resonator assembly. Weak or closely spaced sidebands may be more challenging to distinguish from the carrier frequency peak or from additional interference and noise, particularly in environments with high electromagnetic interference such as may be experienced in a wireless power transfer environment. Thus, optimizing the modulation frequency difference, modulation frequency bandwidth, and the close matching of the carrier frequency and the resonator frequency can aid accurate position determination. Downmixing the locator signal distribution into the baseband and applying a filter according to the modulation frequency bandwidth may act optimize interference reduction.

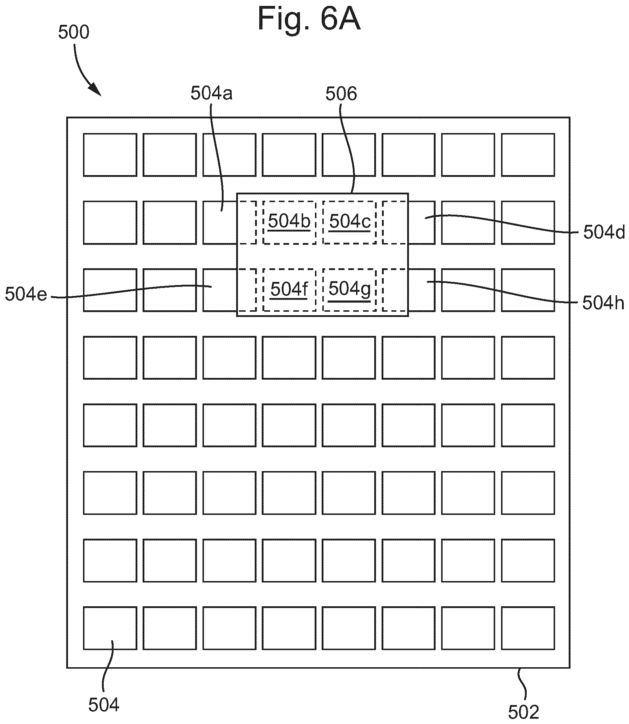

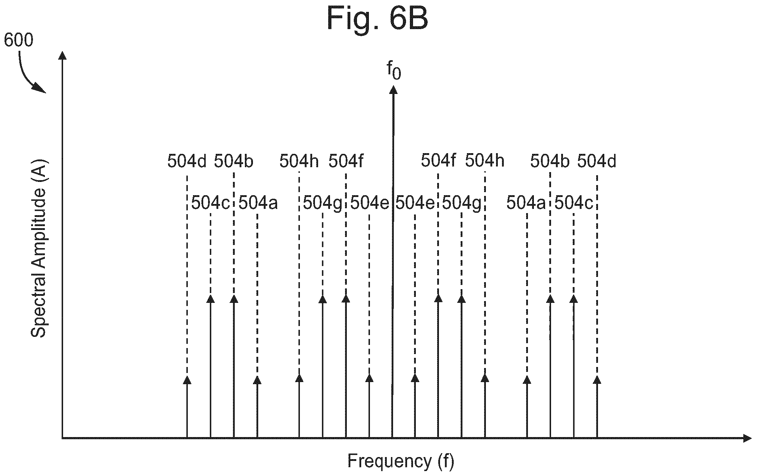

Referring to FIG. 6A, the example PD system 500 of FIG. 5A is depicted, wherein the reader assembly 506 has moved relative to the ground-based resonator housing 502 and the resonators 504 thereof, as the associated vehicle (not shown) continues to park. As can be seen in FIG. 6A, the reader assembly 506 was moved during parking and now covers at least a portion of eight resonators 504ah of the ground-based resonator housing 502. The associated locator signal distribution can be seen in the plot 600 of FIG. 6B. Following movement of the vehicle, four resonators 504b-c, 504f-g can be observed in FIG. 6A as being completely covered by the reader assembly 506, such that the associated locator signals of these resonators 504b-c, 504f-g are observed in the plotted distribution 600 to have the strongest respective signal amplitudes. The remaining partially covered resonators 504a,d,e,g are seen to yield lower respective peaks correlating with their comparative proximity to the reader assembly 506 in the parking arrangement of FIG. 6A.

In the examples shown in FIG. 5A, FIG. 5B, FIG. 6A and FIG. 6B, the PD system is configured to determine when the reader assembly 506 is positioned within a predefined charging region of the ground-based resonator housing 502. In the predefined charging region, wireless power transfer between a ground-based WPT apparatus and a vehicle based WPT apparatus of a WPT system is enabled as described herein. Upon determining that the reader assembly 506 is positioned within a predefined charging region of the ground-based resonator housing 502, the PD system is further configured to instruct the WPT system to initiate wireless power transfer. The PD system is further configured to, following the position determination, output the determined position in any suitable form, for example to a display system for display to a driver of the vehicle, or to an autonomous driving or autonomous parking system.

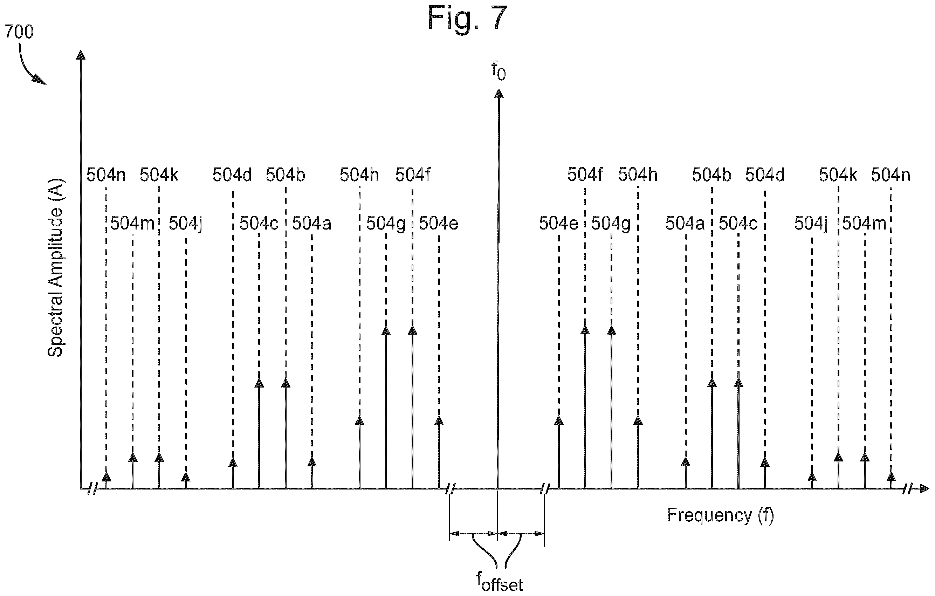

Referring to FIG. 7, an example plot 700 is shown provided in line with that shown for FIG. 5B. In the plot 700 of FIG. 7, the locator signals received at the receiver are square wave signals. Such signals typically result in the presence of additional sideband pairs due to the presence of a higher order of Fourier components of a square signals, driven by the presence of additional harmonics. In the particular example shown, the reader assembly 506 applies an offset frequency modulation ($f_{offset}$) such that modulation frequencies of the resonators 504 comprise no spectral overlap with the third harmonic of the corresponding fundamental modulation frequency. As such, in the plot 700 shown, the data represents locator signals filtered in accordance with the modulation frequency offset ($f_{offset}$), thereby removing the additional harmonics of the square wave locator signals. The overall locator signal distribution from the plot 700 of FIG. 7 corresponds to the parking arrangement depicted in FIG. 5A, and as represented in the plot 550 of FIG. 5B.

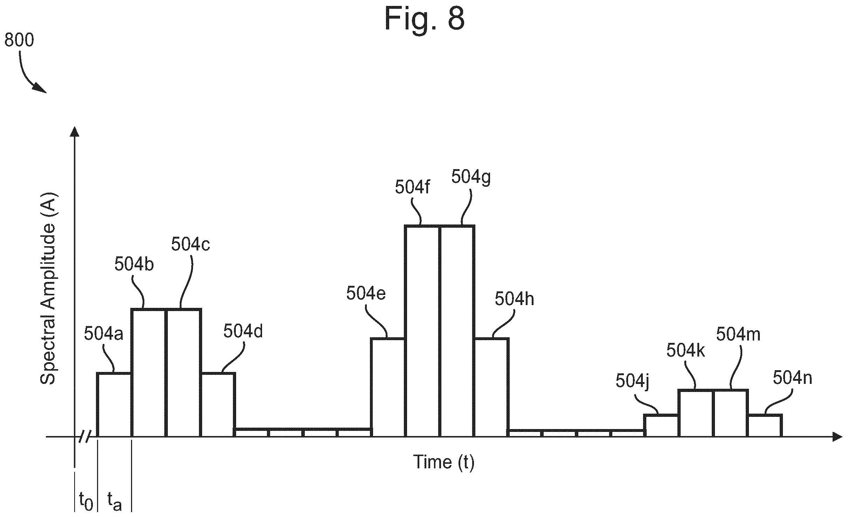

The examples described in relation to FIG. 5A, FIG. 5B, FIG. 6A, FIG. 6B and FIG. 7 make use of a unique modulation frequency of each resonator as the unique locator signal characteristic corresponding to the unique resonator location within the position monitoring region of the ground-based resonator housing. In particular, the unique modulation frequencies are assessed using frequency divisional multiplexing which, in combination with the spectral amplitude of each modulation frequency sideband pair, can indicate the position of the reader assembly relative to the resonator assembly. Examples will be appreciated, however, wherein any suitable unique locator signal characteristic may be employed such as those described herein. In particular, example systems and methods disclosed herein may use time division multiplexing (TDM) to distinguish between different resonators within the resonator assembly, wherein a given unique time slot per resonator may inform on the unique location of the resonator within the position monitoring region. Referring to FIG. 8, an example plot 800 is shown, which reflects a distinct temporal arrangement of the locator signals, and therefore displays how locator signal amplitude varies over time rather than across different frequencies. A receiver can use TDM to optimize bandwidth usage by allocating a unique time slot for transmission of a locator signal from each resonator in the resonator assembly over a single frequency channel, thereby potentially avoiding frequency overlap and also reducing any potential interference between simultaneous transmissions.

In the spectral amplitude plot 800 for the example TDM receiver, the parking arrangement is in line with that depicted in FIG. 5A, wherein twelve resonators 504a-n are at least partially covered by the reader assembly 506. The signal amplitude of received locator signals from each of the twelve resonators 504a-n is displayed on the vertical axis, with unique locator signal transmission time slots displayed on the horizontal axis. Each amplitude segment corresponds to a locator signal received from a resonator 504, each transmitting within its pre-defined time slot, wherein for example the first resonator 504a is configured to transmit the respective locator signal during the allocated time slot $t_a$ as shown. These peaks represent moments when the receiver is actively receiving locator signals from the resonators.

Unlike the frequency-based multiplexing methods FIG. 5B, FIG. 6B and FIG. 7, the TDM receiver system of the example 800 shown uses a single modulation frequency for all communications. As a result, the plot represents the timing and duration of each transmission rather than the frequency. Examples will be appreciated wherein any suitable combination of frequency division multiplexing and time division multiplexing may be employed. The spectral amplitude (A) of each peak can indicate the proximity of each resonator to the reader assembly in the same manner as described in relation to the FIG. 5B, FIG. 6B, and FIG. 7, with higher amplitudes generally indicating a closer proximity.

Proper synchronization of time instance and time duration of time slots may be important in such TDM systems to prevent overlapping transmissions. Such TDM implementations can combine the benefits of unique timeslot allocation to a specific resonator location, with the reduced frequency resources required, and could thereby make TDM implementations efficient in environments where spectrum availability is limited. Time slot allocation, for example a granularity in time instance and duration within a transmission period, may be required to be carefully curated in order to ensure suitability for monitoring a moving reader assembly, such as while a vehicle is parking or departing from a WPT charging site. Additional granularity may result in increasing transmission brevity, which could in some cases cause increased complexity in timing management. In such cases systems may employ TDM in combination with other techniques as described herein, wherein TDM implementation may provide a more suitable positioning determination during time periods when a reader assembly is determined to not be moving, or to moving very slowly, such as when the vehicle is parked.

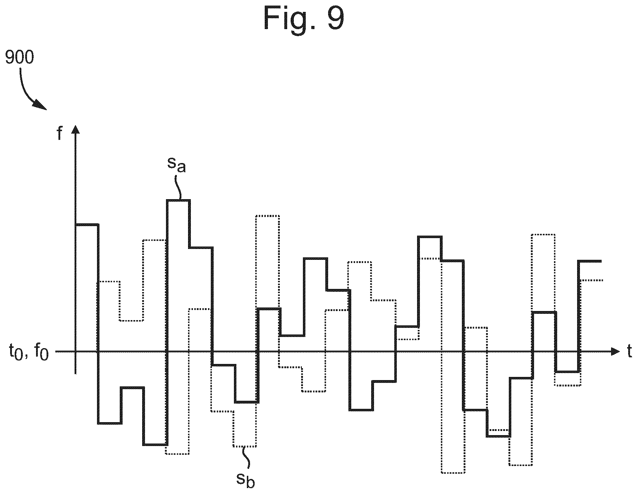

A further example of a suitable unique locator signal characteristic for use in the present systems and methods may be a unique code encoded into the locator signal by the resonator, for example a unique frequency hopping pattern. Code division multiplexing may be employed by systems and methods described herein in linking a unique location of a resonator in the position determining region to a specific code encoded into the locator signal. Referring to FIG. 9, an example plot 900 is shown depicting how unique frequency hopping patterns may be encoded into locator signals of corresponding resonators, with frequencies displayed over time. The data of FIG. 9 is plotted from locator signals received from two resonators 504a, 504b in a parking arrangement as depicted in FIG. 5A. Each resonator 504a, 504b transmits a corresponding locator signal $s_a$; $s_b$ over multiple frequencies across a time period, switching frequencies during the time period according to any suitable method, which may for example be a pseudorandom sequence known both to the corresponding resonator and the reader assembly. This frequency hopping can in some cases ensure that even if one frequency faces interference, other frequencies remain unaffected, thus maintaining the integrity of the overall locator signal transmissions.

In the plot 900, corresponding locator signals $s_a$; $s_b$ can be observed to jump across the frequency spectrum in a pattern according to the encoded frequency hopping pattern for the corresponding resonator 504a, 504b. Each observed jump corresponds to a change in the transmission frequency as dictated by the corresponding resonator hopping sequence. The known frequency hopping patterns can be decoded by the receiver in order to determine which resonator corresponds to which locator signal. A corresponding signal amplitude (not shown) of the signals can be used in combination with the known frequency hopping patterns to determine the position of the reader assembly relative to the resonator assembly. The signal amplitude will be expected to vary as described herein in accordance with a proximity of the corresponding resonator to the receiver of the reader assembly.

Frequency hopping used in CDM can provide similar benefits to TDM. Since each locator signal hops through frequencies in a predetermined manner, this technique can help in managing interference while still permitting multiple resonators to occupy the same overall frequency band. In particular, by constantly changing frequencies, the likelihood of two or more resonators transmitting a locator signal on the same frequency at the same time is minimized. Even with overlapping frequency bands, the locator signals can still be distinctly demodulated by the receiver due to the orthogonal nature of the spreading codes, and can be particularly suited for highly densely populated resonator environments, where enhanced precision is required in the position determination.

In particular environments wherein interference may be of particular concern, techniques may be implemented to modify the carrier frequency of the interrogation signal such that the effect of the interference identified on a particular frequency channel is mitigated. For example, techniques such as adaptive frequency agility may be used to dynamically adjust the carrier frequency of the interrogation signal. The process may comprise the detection, by the receiver, of an interference signal at one or more frequencies. The detection may additionally comprise monitoring the temporal behavior of the detected interference, for example to determine if the interference is intermittent or continuous.

Using the information gathered during the detection and monitoring, the receiver may, for example by way of an implemented algorithm, determine an appropriate modified carrier frequency. Such an algorithm may, for example, be based on predefined rules or use machine learning techniques to predict the optimal modified carrier frequency for the interrogation signal, aiming to select a frequency that minimizes the impact of the detected one or more interferences. The receiver may then modify the carrier frequency of the interrogation signal based on the selected modified frequency, and may be performed in real-time or near-real-time to quickly mitigate the effects of interference. The selected carrier frequency may be selected to avoid the detected interference while maintaining effective communication with the resonators.

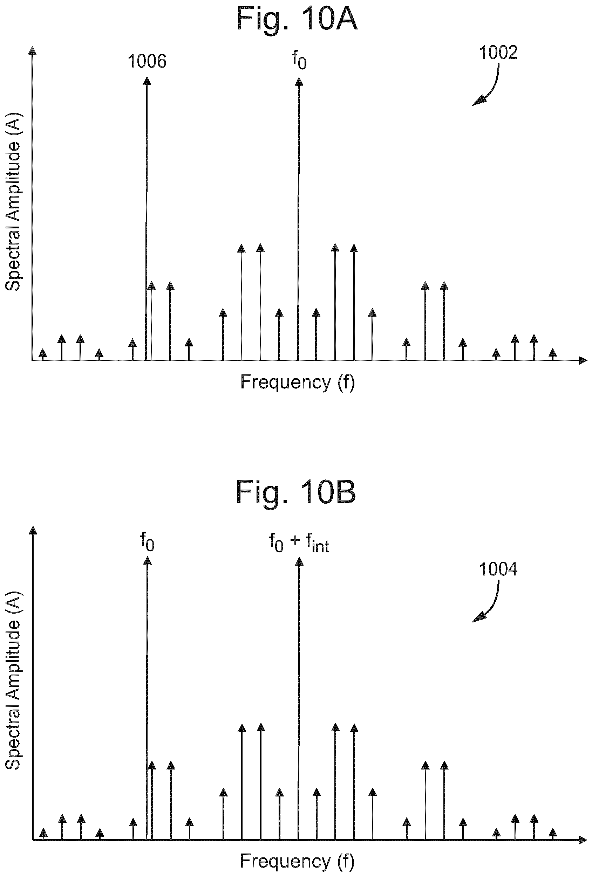

Example plots 1002, 1004 demonstrating this process can be seen in FIG. 10A and FIG. 10B, depicting locator signal distributions received in line with the example 500 described herein in relation to FIG. 5A and FIG. 5B, wherein the unique locator signal characteristic is associated with a unique modulation frequency of the resonators within the resonator assembly, and wherein the receiver of the reader assembly is configured to employ frequency division multiplexing to differentiate locator signals from different resonators. The plots 1002, 1004 depict modulation frequency-specific sideband pairs observed about a central carrier frequency ($f_0$) as described for FIG. 5B. The plot 1002 of FIG. 10A depicts an interference signal 1006 observed proximate a sideband and potentially impacting the position determination using the affected sideband. Accordingly, the receiver is configured in this particular example to detect the interference signal 1006, and determine an optimal carrier frequency modifier ($f_{int}$) such that the observed sidebands are shifted away from the frequency band of the interference signal 1006. The receiver is then configured to modify the carrier frequency ($f_0$) by the frequency modifier ($f_{int}$) to achieve a modified carrier frequency ($f_0 + f_{int}$) such that the interference signal 1006 does not impact the observed sidebands as shown in FIG. 10B. In some examples the carrier frequency modification may be determined according a potential impact on locator signals having a particular amplitude value, for example locator signals having an amplitude value occurring within an upper range of observed amplitude values, for example an upper quartile of observed amplitude values. Thereby the receiver may prioritize interference mitigation for locator signals which may be particularly relevant to the position determination. Such prioritisation may improve precision and accuracy of position determination while reducing unnecessary resource usage on interference mitigation for low-priority locator signals.

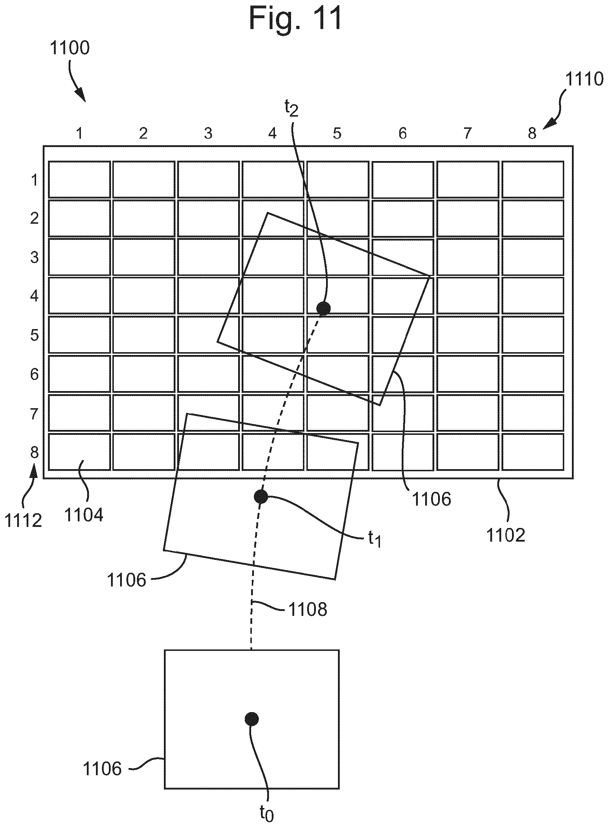

Referring to FIG. 11, a further example 1100 of a positioning system is shown for use in accordance with systems and methods of the present disclosure, the example 1100 shown indicating a trajectory of a vehicle with an associated VA moving relative to a ground-based resonator housing over time and captured at three distinct time instances $t_0$, $t_1$, $t_2$. The further example 1100 is substantially as described for the example 500 of FIG. 5A, and may be used in conjunction with any associated features or methods. The example system 1100 shown comprises the same spatial distribution of resonators located within the position monitoring region of a ground-based resonator housing 1102, with an array of 8 x 8 resonators 1104 as shown for FIG. 5A. As with the example 500 of FIG. 5A, the system 1100 further comprises a reader assembly 1106 which, in the example 1100 shown, is comprised within a vehicle unit (see, for example, vehicle unit 130, 230 which comprises VA PD 238, 330, 430) of a vehicle (not shown), the reader assembly 1106 positionable relative to the resonator assembly comprising the plurality of resonators 1102 as the vehicle moves to park in a parking space comprising the ground-based resonator housing 1102, such as that described in relation to FIG. 1, FIG. 3A, FIG. 3B and FIG. 4. The reader assembly 1106 is shown depicted at three different time instances $t_0$, $t_1$, $t_2$ as the associated vehicle moves along a trajectory 1108 to park. As the vehicle moves along the trajectory 1108 to park, the reader assembly 1106 will change proximity with respect to resonator 1104 within the resonator assembly such that corresponding amplitude of locator signals may be used to determine a position of the reader assembly 1106 relative thereto as described herein. The resonators 1104 of the system 1100 depicted are shown having corresponding positions on an x-axis 1110 (referred to herein as x-positions) and positions on an y-axis 1112 (referred to herein as y-positions). As described herein, each resonator 1104 comprises an assigned locator signal characteristic linked to the corresponding position of the resonator 1104 in the resonator assembly. The assigned locator signal characteristics may be any suitable assigned locator signal characteristic as described herein, for example an assigned modulation frequency.

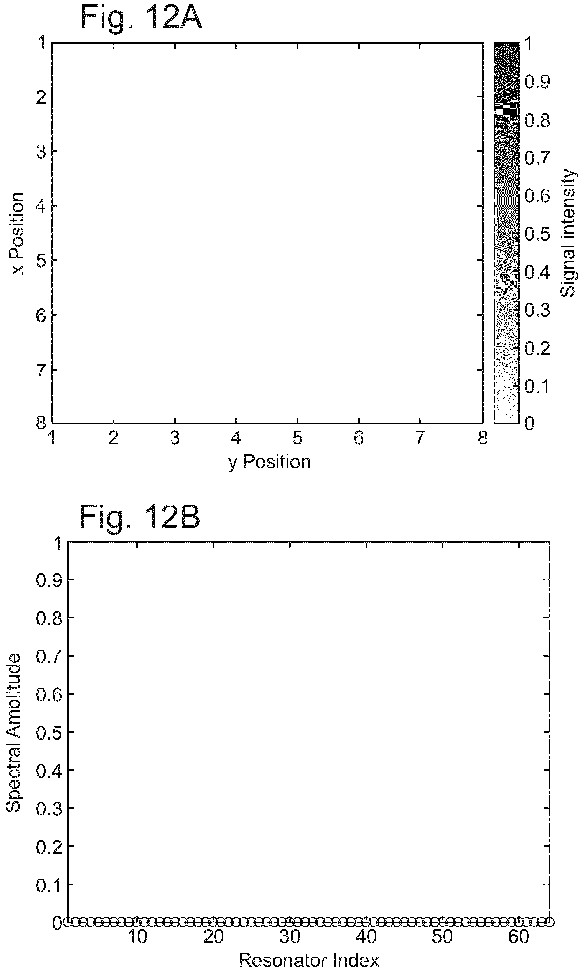

FIG. 12A to 14B depict example locator signal measurements which may be observed at each different time instance $t_0$, $t_1$, $t_2$, and used by the system 1100 to determine the position at the different time instances $t_0$, $t_1$, $t_2$. Referring to FIG. 12A and 12B, a heatmap and a spectral amplitude chart is shown respectively, each representing locator signal amplitudes of resonators 1104 of the system 1100 of FIG. 11 at each x-position 1110 and y-position 1112, as would be observed at time $t_0$. The horizontal axis of the chart of FIG. 12B indicates each resonator 1104 index within the 8 x 8 resonator assembly, with the indices ranging from 1 to 64 proceeding left to right per row of the resonators 1104 in the resonator assembly, such that the resonator at [x, y] position [1, 1] comprises resonator index 1, resonator at [x, y] position [1, 8] comprises resonator index 8 , resonator at [x, y] position [2, 1] comprises resonator index 9 and the resonator at [x, y] position [8, 8] comprises resonator index 64. As can be seen from FIG. 11, at $t_0$ the reader assembly 1106 is not proximate any of the resonators 1104 of the resonator assembly such that, as depicted in the heatmap of FIG. 12A and the chart of FIG. 12B, reflected amplitudes of the locator signals are not detected by the reader assembly 1106 of the system 1100 at $t_0$.

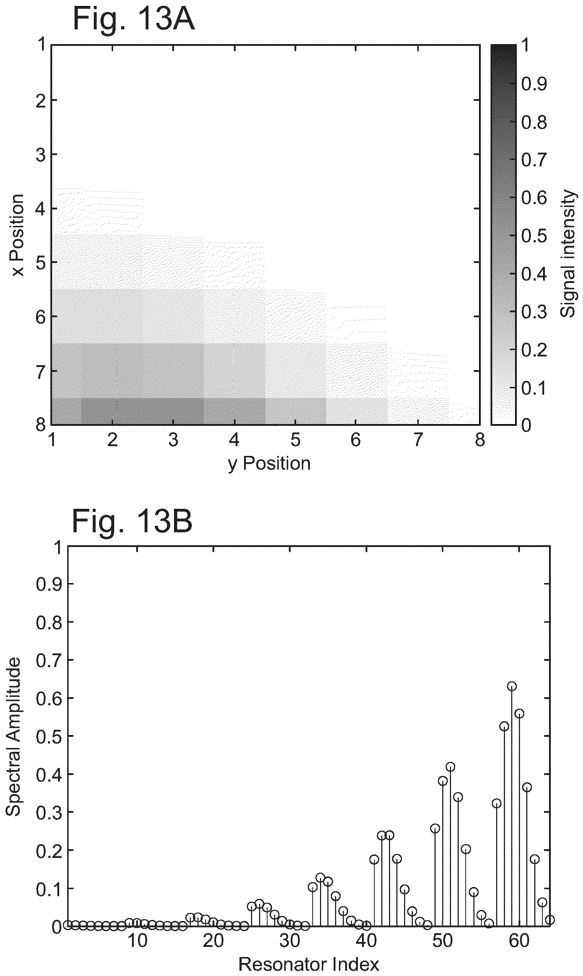

FIG. 13A and 13B also show a heatmap and a spectral amplitude chart respectively, each representing locator signal amplitudes of resonators 1104 of the system 1100 of FIG. 11 at each x-position 1110 and y-position 1112, as would be observed at time $t_1$. As can be seen from FIG. 11, the reader assembly 1106 has moved between $t_0$ and $t_1$ such that the reader assembly 1106 is more proximate the resonators 1104 of the resonator assembly at $t_1$ than at $t_0$, as the vehicle moves to park at a predetermined parking location as described herein. As such, and as depicted in the heatmap of FIG. 13A, locator signals from resonators 1104 at y-positions 6, 7 and 8, and x-positions 1 to 5, are most strongly detected by the reader assembly 1106, with the amplitude values of the corresponding locator signals depicted by the intensity of the shading on the heatmap. Some weaker signals can also be observed to be received from resonators 1104 located about the periphery of those from which the stronger signals are received. The chart of FIG. 13B shows the reflected amplitudes of the locator signals depicted in FIG. 13A, with the highest amplitudes observable from resonators at index positions 58 to 60, with further smaller signals received at adjacent index positions. Progressively smaller amplitude peaks are observable from the resonators at index positions 49 to 55, 41 to 46, 33 to 38, 25 to 29 and 17 to 19. The processor, upon receiving locator signal data, such as that exemplified in the charts of FIG. 13A and FIG. 13B, may perform a position determination to determine the position of the reader assembly 1106 relative to the resonator assembly in line with that described herein. For example, the locator signal data may form a pattern which corresponds to, or correlates most strongly with, a predetermined or pre-simulated such position determinable by the processor.

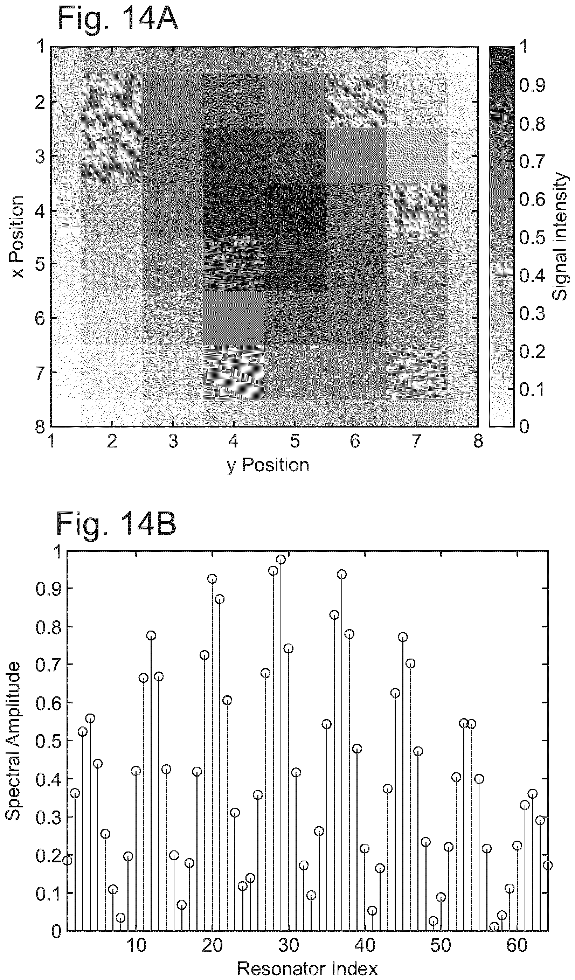

FIG. 14A and 14B also show a heatmap and a spectral amplitude chart respectively, each representing locator signal amplitudes of resonators 1104 of the system 1100 of FIG. 11 at each x-position 1110 and y-position 1112, as would be observed at time $t_2$. As can be seen from FIG. 11, the reader assembly 1106 has moved between $t_1$ and $t_2$, as the vehicle moves to park at a predetermined parking location as described herein. As such, and as depicted in the heatmap of FIG. 14A, locator signals from resonators 1104 spanning y-positions 1 to 8, and x-positions 2 to 7, are detected most strongly by the reader assembly 1106, with the amplitude values of the corresponding locator signals depicted by the intensity of the shading on the heatmap. The chart of FIG. 13B shows the reflected amplitudes of the locator signals depicted in FIG. 13A, with the highest amplitudes observable from resonators at index positions 28 and 29. Further strong peaks are also observable across the range of resonator indexes, with the resulting shape of the heatmap, or pattern represented by the associated locator signal peaks, providing an indication of the orientation of the reader assembly 1106 relative to the ground-based resonator housing 1102. As such, the amplitude values may in some examples provide an indication of a x-position and a y-position of the reader assembly relative to the resonator assembly, along with an orientation of the reader assembly. It will be appreciated that different arrangements of resonators may be suitable, and that a greater number of resonators per area of the ground-based resonator housing may provide more accurate orientation determination. It will additionally be appreciated that two or more readers of the reader assembly may be spatially distributed thereon to provide corresponding data sets or patterns which may be compared by the processor to determine an orientation or rotation angle of the reader assembly.

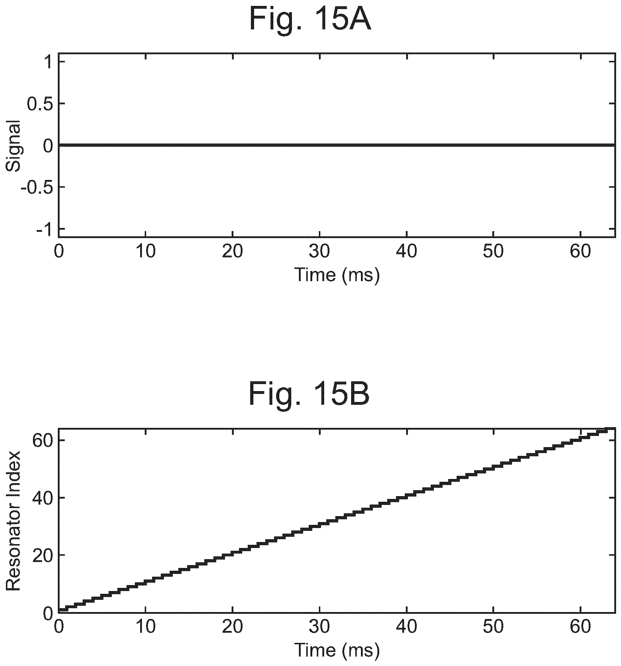

Referring to FIG. 15A to 17D, charts are depicted representing an alternate use of the system 1100 of FIG. 11, wherein the assigned locator signal characteristic of each resonator 1104 of the resonator assembly is associated with a locator signal transmission time slot of the resonator 1104, such that each resonator 1104 in the resonator assembly is configured to transmit the respective locator signal to be received by the reader assembly 1106 during the assigned time slot. In particular, at the corresponding assigned time slot, each resonator 1104 is configured to transmit the locator signal for 1 ms. Since there are 64 resonators 1104 in the resonator assembly of FIG. 11, this transmission time slot corresponds to a full frame duration of the resonator assembly of 64 ms. As such, in the particular example described, the resonator assembly comprises a positioning update time of 64 ms (15.6 Hz). In the particular example described in relation to FIG. 15A to 17D, during the assigned time slot, the resonator 1104 at [x, y] position [1, 1] is configured to modulate an interrogation signal transmitted by the reader assembly 1106 with a frequency of 50 kHz. Each subsequent resonator 1104 is configured to, during the respective assigned transmission time slot, modulate the interrogation signal with a frequency which increases at 100 Hz with each subsequent resonator 1104 in the resonator assembly, following the indexing pattern discussed previously.

Referring to FIG. 15A, a chart is shown depicting locator signal amplitude received at the reader assembly 1106 over time, at $t_0$. Referring to FIG. 15B, a chart is shown depicting the assigned time slot of each resonator 1104 of the resonator assembly, the resonators of the resonator assembly indexed in the same manner as that described for the example of FIG. 12A to 14B. As can be seen in FIG. 11, at $t_0$ the reader assembly 1106 is not proximate any of the resonators 1104 of the resonator assembly such that, as depicted in the chart of FIG. 15A, reflected amplitudes of the locator signals are not detected by the reader assembly 1106 of the system 1100 at $t_0$.

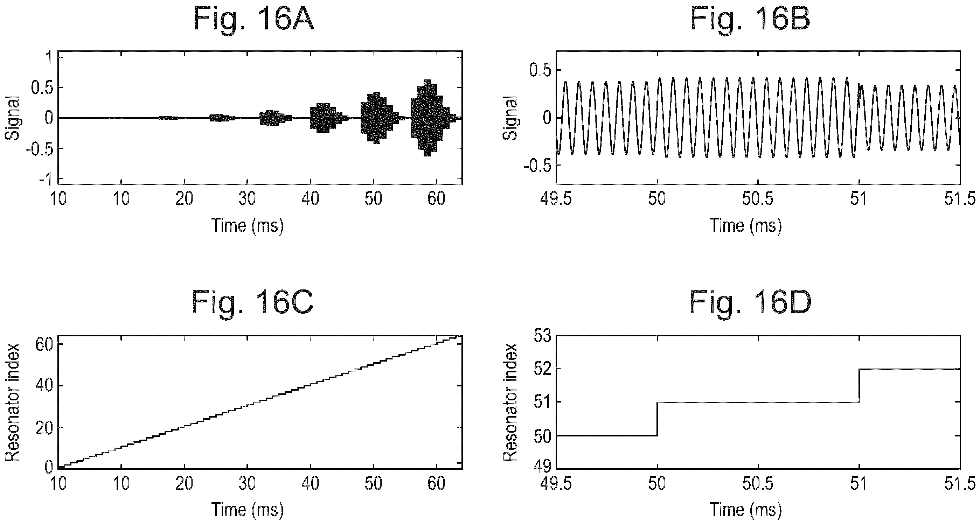

Referring to FIG. 16A, the chart corresponds to that of FIG. 15A, but depicts locator signal amplitudes received at the reader assembly 1106 during $t_1$. As can be seen from FIG. 11, the reader assembly 1106 has moved between $t_0$ and $t_1$ such that the reader assembly 1106 is more proximate the resonators 1104 of the resonator assembly at $t_1$ than at $t_0$, as the vehicle moves to park at a predetermined parking location as described herein. As such, and as depicted in the chart of FIG. 16A, locator signals with the highest amplitudes are received at the reader assembly 1106 from resonators 1104 having assigned time slots between 56 ms and 63 ms, with progressively smaller amplitude peaks also observable from the resonators having assigned time slots of 48 ms to 54 ms, 40 ms to 46 ms, 33 ms to 38 ms, and 24 ms to 28 ms. The chart of FIG. 16B aligns with the chart of FIG. 15B and depicts that the transmission time slots assigned to each resonator 1104 comprise a 1 ms duration over a 64 ms transmission frame, each 1 ms time slot within the frame assigned in sequence with increases resonator index. Referring to FIG. 16C and FIG. 16D, a close-up view of the charts of FIG. 16A and FIG. 16B are shown, depicting signal transmission proximate the end portion of the assigned transmission time slot of the resonator 1104 having index 50 and an assigned time slot of 49 ms to 50 ms, the full assigned transmission time slot of the resonator 1104 having index 51 and an assigned time slot of 50 ms to 51 ms, and the beginning portion of the assigned transmission time slot of the resonator 1104 having index 52 and an assigned time slot of 51 ms to 52 ms. The close-up chart view of FIG. 16C shows that the transmission time slots of each resonator are discrete. The reduced locator signal amplitude observable from the resonator 1104 at index 52 when compared with the resonator 1104 at index 51 indicates that the resonator 1104 at index 51 was closer to the reader assembly 1106 than the resonator 1104 at index 52 at $t_1$. The processor, upon receiving the locator signal data, such as that exemplified in the charts of FIG. 16A and FIG. 16B, may perform a position determination to determine the position of the reader assembly 1106 relative to the resonator assembly in line with that described herein.

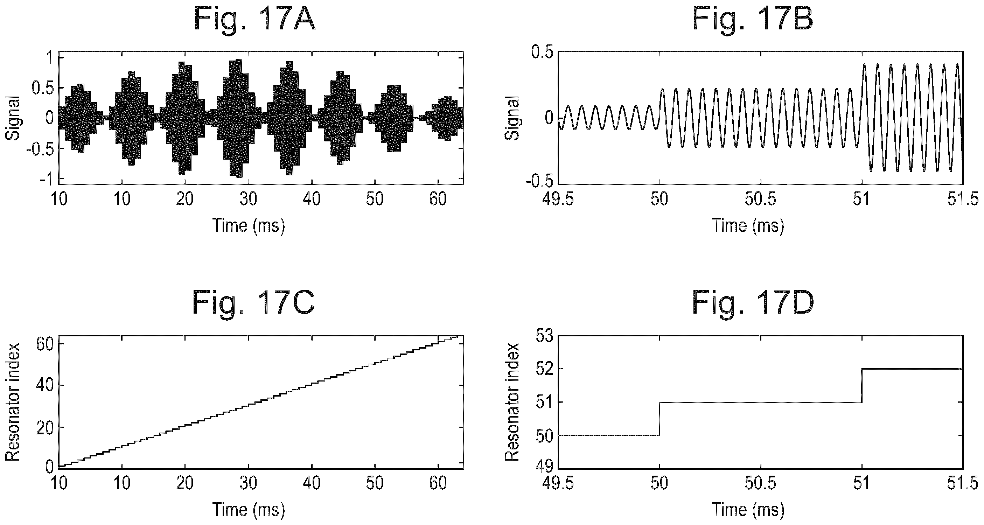

Referring to FIG. 17A, the chart corresponds to that of FIG. 15A and FIG. 16B, but depicts locator signal amplitudes received at the reader assembly 1106 during $t_2$. As can be seen from FIG. 11, the reader assembly 1106 has moved between $t_1$ and $t_2$, as the vehicle moves to park at a predetermined parking location as described herein. As such, and as depicted in the chart of FIG. 17A, the highest amplitudes are observable as peaks of locator signals received from resonators 1104 located about those having assigned time slots starting at 19 ms, 20 ms, 27 ms, 28 ms, 36 ms, 37 ms, 45 ms and 45 ms, the resonators having index positions 20, 21, 28, 29, 37, 38, 46 and 47 respectively. Additional strong peaks are also observable about the resonators 1104 having assigned time slots starting at 11 ms and 51 ms, at index positions 12 and 52 respectively. The chart of FIG. 17B aligns with the charts of FIG. 15B and FIG. 16B, depicting the transmission time slots assigned to each resonator 1104 over the 64 ms transmission frame. Referring to FIG. 17C and FIG. 17D, a close-up view of the charts of FIG. 17A and FIG. 17B are shown, depicting signal transmission proximate the end portion of the assigned transmission time slot of the resonator 1104 having index 50 and an assigned time slot of 49 ms to 50 ms, the full assigned transmission time slot of the resonator 1104 having index 51 and an assigned time slot of 50 ms to 51 ms, and the beginning portion of the assigned transmission time slot of the resonator 1104 having index 52 and an assigned time slot of 51 ms to 52 ms. The close-up chart view of FIG. 17C shows the reduced locator signal amplitude observable from the resonator 1104 at index 50 when compared with the resonator 1104 at index 51, indicating that the resonator 1104 at index 51 was closer to the reader assembly 1106 than the resonator 1104 at index 50 at $t_2$. Examples will be appreciated wherein the assigned transmission time slots may be shorter or longer than those in the examples described. It will be appreciated that the system may, in some examples, model the vehicle trajectory 1108 based on position determinations performed at two or more said time instances $t_0$, $t_1$, $t_2$. The processor may use such a model to predict or interpolate a future position of the vehicle, which may in some examples reduce the number of instances in which a position determination is required to be performed. Such a rate or frequency of position determination may be, for example, linked to vehicle speed. The modeling of the trajectory, for example by the processor, may be based on additional sensor data such as accelerometer data in some examples. Such modeling of the trajectory of the vehicle may reduce a required position update frame rate, thereby serving to reduce processing requirements. While for clarity some of the signal amplitudes are depicted herein as zero, it will be appreciated that there may be a baseline level of noise observable irrespective of the proximity of any resonators to the reader assembly.

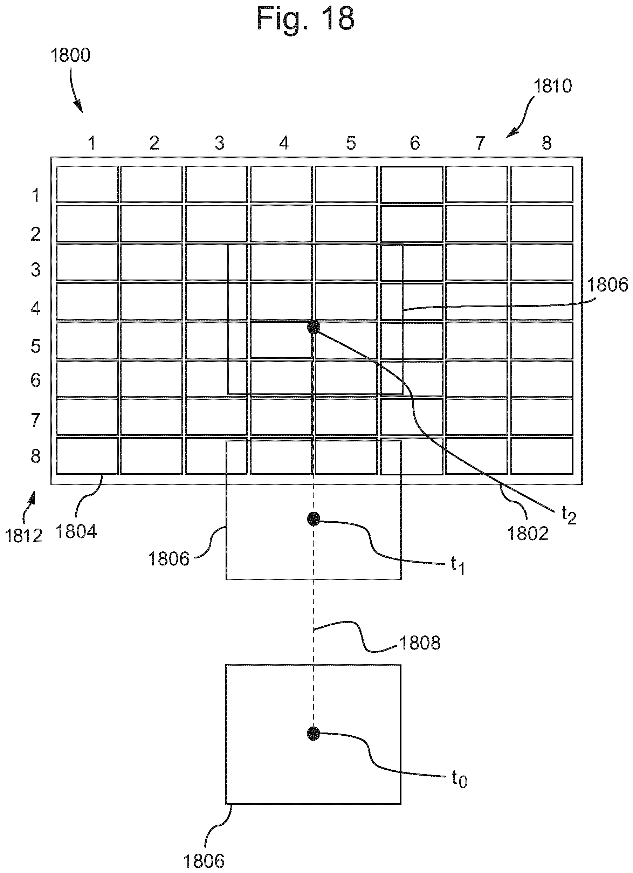

Referring to FIG. 18, an alternative example 1800 of a positioning system is shown for use in accordance with systems and methods of the present disclosure, the example 1800 shown substantially in line with that depicted and described in relation to FIG. 11. The alternative example 1800 indicates a trajectory 1808 of a vehicle with an associated VA 1806 moving relative to a ground-based resonator housing 1802 over time and captured at three distinct time instances $t_0$, $t_1$, $t_2$. The example 1800 is substantially as described for the example 1100 of FIG. 11 and the example 500 of FIG. 5A, and may be used in conjunction with any associated features or methods. In particular, the example system 1800 shown comprises the same spatial distribution of resonators located within the position monitoring region of a ground-based resonator housing 1802, with an array of 8 x 8 resonators 1804 as shown for FIG. 5A and FIG. 11. As with the example 500 of FIG. 5A and the example 1100 of FIG. 11, the system 1800 further comprises a reader assembly 1806 which, in the example 1800 shown, is comprised within a vehicle unit (see, for example, vehicle unit 130, 230 which comprises VA PD 238, 330, 430) of a vehicle (not shown), the reader assembly 1806 positionable relative to the resonator assembly comprising the plurality of resonators 1802 as the vehicle moves to park in a parking space comprising the ground-based resonator housing 1802, such as that described in relation to FIG. 1, FIG. 3A, FIG. 3B and FIG. 4. The reader assembly 1806 is shown depicted at three different time instances $t_0$, $t_1$, $t_2$ as the associated vehicle moves along a trajectory 1808 to park. As the vehicle moves along the trajectory 1808 to park, the reader assembly 1806 changes proximity with respect to resonators 1804 within the resonator assembly such that corresponding amplitude of locator signals may be used to determine a position of the reader assembly 1806 relative thereto as described herein. The resonators 1804 of the system 1800 depicted are shown having corresponding positions on an x-axis 1810 (referred to herein as x-positions) and positions on an y-axis 1812 (referred to herein as y-positions). As described herein, each resonator 1804 comprises an assigned locator signal characteristic linked to the corresponding position of the resonator 1804 in the resonator assembly. The assigned locator signal characteristics may be any suitable assigned locator signal characteristic as described herein, for example an assigned modulation frequency. Contrary to the example 1100 of FIG. 11, the trajectory 1808 of the alternate example 1800 shown is in a straight line, resulting in a different orientation of the reader assembly 1806 relative to the resonator assembly 1802.

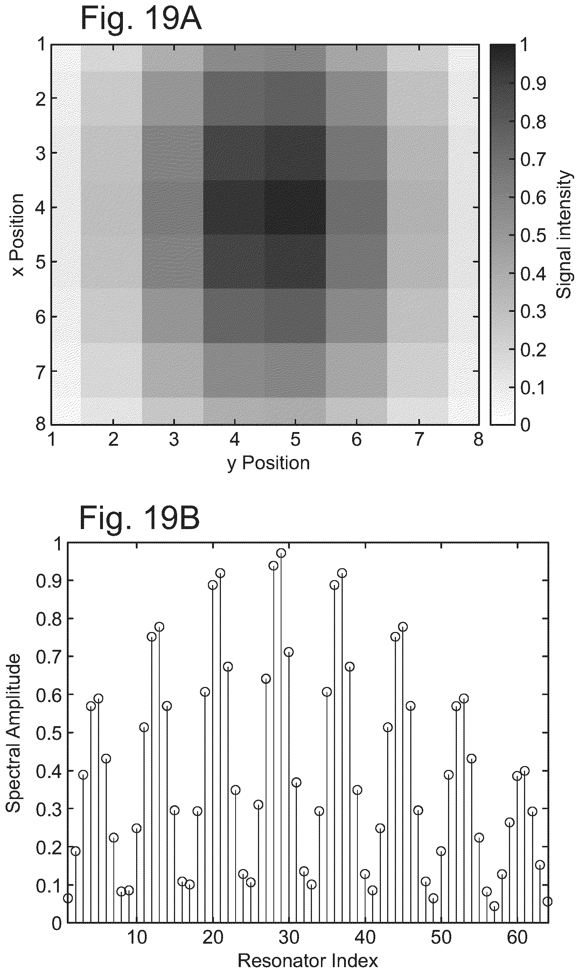

FIG. 19A to FIG. 20D demonstrate that the different orientation of the reader assembly 1806, when compared to the reader assembly 1106 of the example 1100 of the FIG. 11, can be represented in the locator signal data received at the reader assembly 1806 from resonators 1804 of the resonator assembly 1802. In particular, and referring to FIG. 19A and FIG. 19B, a heatmap is shown in line with that shown for FIG. 14A, and a spectral amplitude chart is shown in line with that shown for FIG. 14B, respectively. Each of FIG. 19A and FIG. 19B represent locator signal amplitudes of resonators 1804 of the system 1800 of FIG. 18 at each x-position 1810 and y-position 1812, as would be observed at the third time $t_2$ of the parking scenario depicted. Contrasting FIG. 19A with FIG. 14A, which shows the locator signal amplitudes of resonators 1104 of the system 1100 of FIG. 11 at the third time $t_2$ of the parking scenario of FIG. 11, the different orientation of the reader assembly 1806 of FIG.

19A can be observed from the pattern shown in the heatmap. Similarly, the pattern of locator signal amplitudes represented in the chart of FIG. 19B, when contrasted with that of FIG. 11B, can also be observed to represent the distinct orientation of the reader assembly 1806.

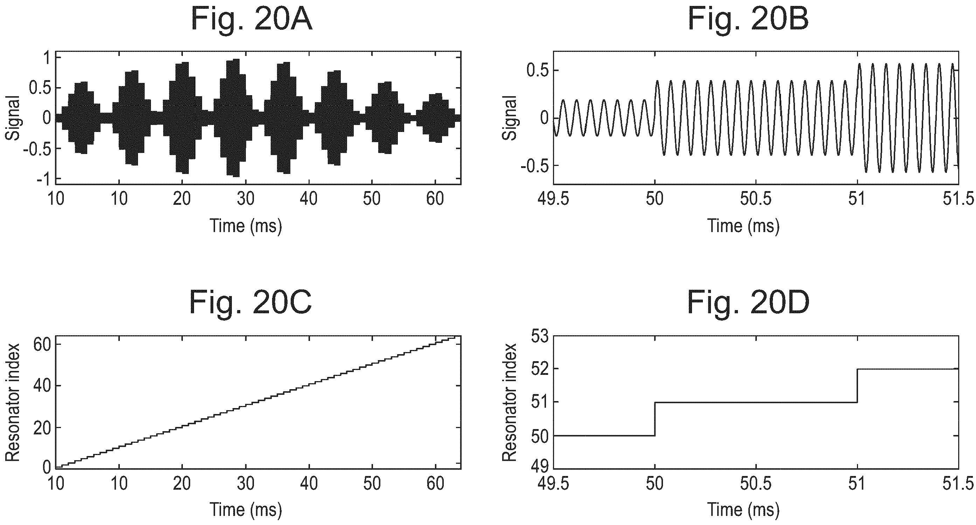

Referring to FIG. 20A to FIG. 20D, time-divisional multiplexing locator signal data is provided, the data received at the reader assembly 1806 at the third time $t_2$ of the example 1800 parking scenario provided in FIG. 18. Referring specifically to FIG. 20A, a chart is shown depicting the locator signal amplitudes. Referring to FIG. 20B, a chart is shown depicting the assigned time slot of each resonator 1804 of the resonator assembly 1802, the resonators 1804 of the resonator assembly 1802 indexed in the same manner as that described for the example of FIG. 19A to 19B. Referring to FIG. 20C and FIG. 20D, a close-up view of the charts of FIG. 20A and FIG. 20B are shown, depicting signal transmission proximate the end portion of the assigned transmission time slot of the resonator 1804 having index 50 and an assigned time slot of 49 ms to 50 ms, the full assigned transmission time slot of the resonator 1804 having index 51 and an assigned time slot of 50 ms to 51 ms, and the beginning portion of the assigned transmission time slot of the resonator 1804 having index 52 and an assigned time slot of 51 ms to 52 ms. The data provided in FIG. 20A to FIG. 20D contrasts against similar data provided and described in relation to FIG. 17A to FIG. 17D, which represents locator signal data received at the third time $t_2$ of the parking scenario of FIG. 11 in which the reader assembly 1106 comprises a different orientation to the reader assembly 1806 of FIG. 18. As shown in FIG. 19A to FIG. 20D, a pattern of locator signal amplitudes can be used by the processor to determine both the position and the orientation of the reader assembly relative to the resonator assembly. Any suitable manner of determining the orientation from the locator signal amplitudes will be appreciated, for example the locator signal data may form a pattern which corresponds to, or correlates most strongly with, a predetermined or pre-simulated such position determinable by the processor. In some examples, the reader assembly may comprise more than one reader spatially distributed, for example at known relative locations, within the reader assembly, each of the readers obtaining a corresponding data set of locator signal data. Comparing the data sets of the plurality may be used to determine an orientation of the reader assembly relative to the resonator assembly.

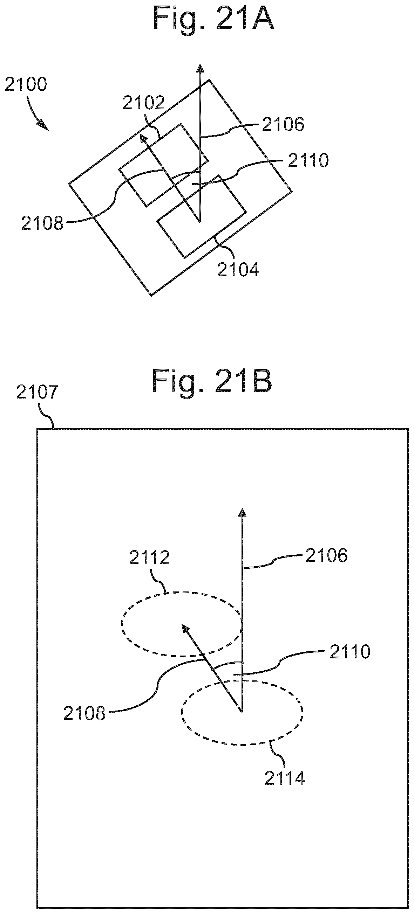

By way of example, and referring to FIG. 21A, a reader assembly 2100 is depicted having a first reader 2102 and a second reader 2104 spatially distributed therein. The reader assembly 2100 is shown rotated relative to a central axis 2106 of a resonator assembly 2107 (as depicted in FIG. 21B), such that a central axis 2108 of the reader assembly 2100 is at a rotation angle 2110 relative to the central axis 2106 of a resonator assembly. In use each reader 2102, 2104 of the reader assembly 2100 may be configured to receive a data set of locator signal data from resonators of the resonator assembly in any suitable manner as described herein, each data set forming a respective data cloud 2112, 2114 associated with the position of the corresponding reader 2102, 2104. A position determination, such as that performed in line with the present disclosure, for each of the readers 2102, 2104, may be compared as depicted in FIG. 21B to determine the rotation angle 2110.

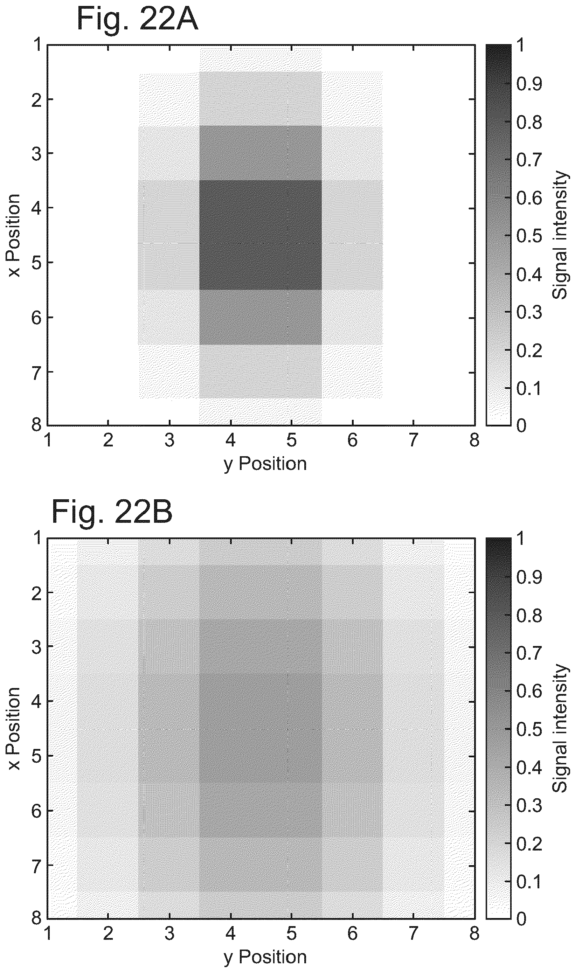

While the position of the reader assembly in the examples described has been discussed in relation to x,y components thereof, relative to the x,y positions of resonators of the resonator assembly, it will be appreciated that any of such examples may include a consideration of the z-component of the position, or a height of the reader assembly relative to resonators of the resonator assembly. Referring to FIG. 22A and 22B, further example heatmaps are depicted, indicating signal intensities of locator signals received at a reader assembly, the locator signals mapped to an individual resonator in any suitable manner described herein, the resonators indexed at known x,y positions on a resonator assembly. The darker shades indicate a higher signal intensity of locator signals received at the reader assembly, the signal intensity associated with a proximity of the corresponding resonator to the reader assembly as discussed herein. In both of FIG. 22A and FIG. 22B, the reader assembly is positioned at the same x,y position, but at a different height or z-distance relative to the resonator assembly. In FIG. 22A, the reader assembly is positioned at a lower height or z-distance from the resonator assembly than in FIG. 22B. The closer proximity of the reader assembly to the resonator assembly results in strong coupling between the reader assembly and the resonator assembly (indicated by higher signal intensities near the central position of the reader assembly), but a reduced number of coupled resonators when compared with FIG. 22B. In the case of FIG. 22B, in which the reader assembly is positioned at a greater height or z-distance from the resonator assembly, the coupling of the resonators to the reader assembly is comparatively weaker, but there are a greater number of resonators from which locator signals are received at the reader assembly. As such, height or z-distance of the reader assembly relative to the resonator assembly may be encoded in the distribution of the locator signal data received at the reader assembly. As such, in some examples the processor may be configured to use the locator signals to determine the height or z-distance of the reader assembly.

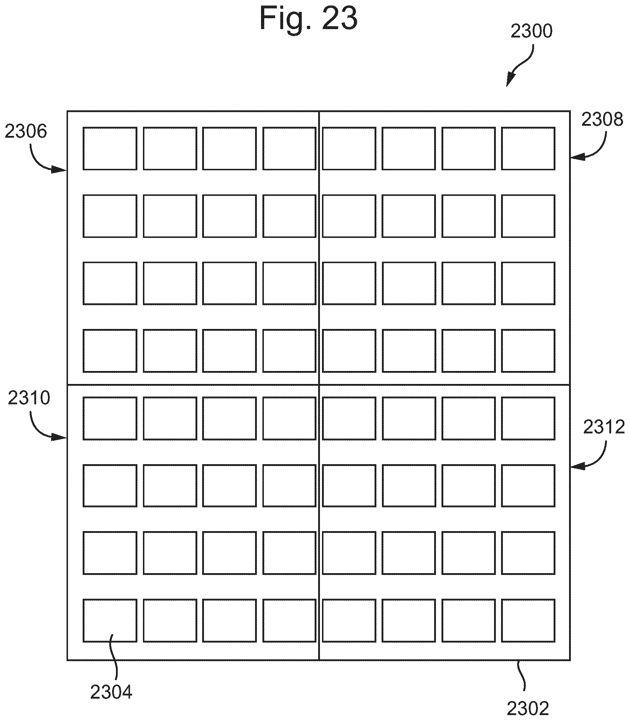

Referring to FIG. 23, a further example 2300 of a positioning system is shown for use in accordance with systems and methods of the present disclosure. The further example 2300 is substantially as described for the example 500 of FIG. 5A, and may be used in conjunction with any associated features or methods. The example system 2300 shown comprises an alternate spatial distribution of resonators located within the position monitoring region of a ground-based resonator housing 2302, with an array of 8 x 8 resonators 2304 as shown for FIG. 5A. The array of resonators 2304 in the alternate example shown is, however, divided into quadrants, and comprises an upper left quadrant 2306, and upper right quadrant 2308, a lower left quadrant 2310 and a lower right quadrant 2312, the resonators 2304 in the array each have a corresponding unique modulation frequency, the modulation frequencies spanning an assigned bandwidth. In the particular example shown, resonators 2304 comprised within the upper half of the array (upper left and right quadrants 2306, 2308) each comprise a corresponding unique modulation frequency having an odd modulation frequency value. The modulation frequencies of the resonators 2304 comprised within the upper left quadrant 2306 occupy the first half of the bandwidth, and the modulation frequencies of the resonators 2304 comprised within the upper right quadrant 2308 are located within the second half of the bandwidth. Resonators 2342 comprised within the lower half of the array (lower left and lower quadrants 2310, 2312) each comprise a corresponding unique modulation frequency having an even modulation frequency value. As with the odd modulation frequency values, the even modulation frequency values are divided among resonators 2302 of the lower left quadrant 2310 and the lower right quadrant 2312 such that each quadrant comprises a half of the modulation frequency bandwidth. As such, a fast initial position determination may be performed based on a detection of an even or an odd modulation frequency, which may be useful for situations or time periods requiring less precision in the position determination or prioritizing fast determination, such as when a vehicle is approaching or is moving quickly relative to the ground-based resonator housing. The fast initial position determination based on the detection of odd or even modulation frequencies may be replaced with a more precise assessment of exact modulation frequency values to increase precision and accuracy of the position determination, for example when the vehicle is in close proximity with a required charging location or charging region. This can potentially provide a bifurcated position determination mixing crude and fine positioning as required.

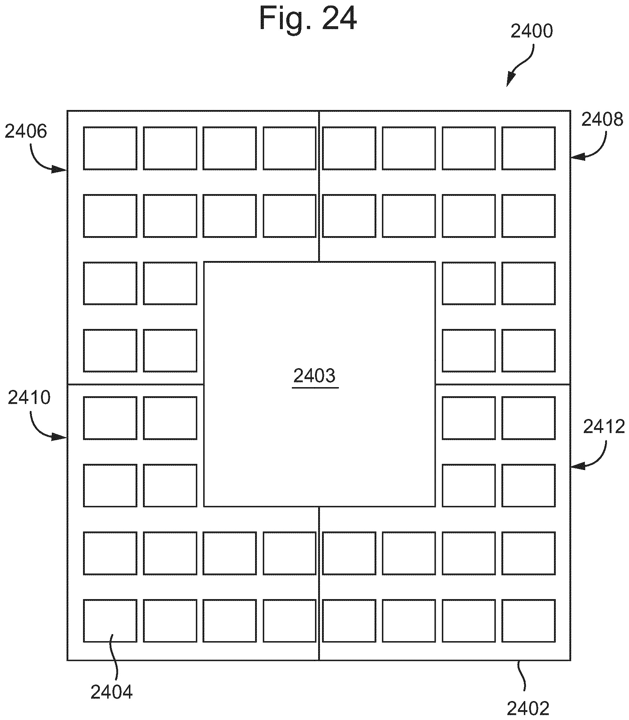

A further alternate spatial arrangement of resonators is provided in a further example 2400 shown in FIG. 24, which is largely the same as the example 2300 provided in FIG. 23 and corresponding numbering is used for consistency. The further example 2400 shows a ground-based resonator housing 2402 comprising an array of smaller resonators 2404 distributed into quadrants 2406, 2408, 2410, 2412 as depicted in FIG. 23, but with a larger central resonator 2405, centrally located in the position monitoring region, the larger central resonator 2405 aligned with a required charging location or charging region of a WPT system such as that described herein. Position determination may be performed as described in relation to FIG. 23, and may include a more precise location of the required charging location by way of the larger resonator 2405. In some examples, the array of resonators 2304 may be envisaged with the larger resonator 2405 positioned as depicted in FIG. 24, the larger resonator 2405 spatially overlapping smaller resonators 2304 in the array, the larger resonator 2405 acting as a communication resonator configured to communicate with the vehicle (or the reader assembly thereof) by way of a communication channel separate to the locator signals transmitted by the smaller resonators 2304. The communication channel may comprise a different frequency band to the locator signals, or in some embodiments may include any suitable communication protocol such as time divisional multiplexing or code divisional multiplexing to permit concurrent communication by way of the communication channel during receipt of locator signals.

Any suitable spatial arrangement of resonators may be used as described herein, and similar to the examples of FIG. 23 and FIG. 24, the resonators may be divided into two or more resonator groups, each group comprising resonators having a particular type of unique locator signal characteristic, such as a particular locator signal value. In the examples described the locator signal values were modulation frequency values divided into odd and even values, with the odd and even frequency values divided across the locator signal bandwidth. Other examples will be appreciated based on the present disclosure, and may for example include dividing resonators spatially according to a particular locator signal transmission time slot, or a particular locator signal encoding. For example, specific subregions within the position monitoring region may comprise resonators configured to transmit locator signals within a particular time slot for a fast initial position determination, followed by a reversion to resonator-specific time slots for a more precise position determination. Similarly, in other examples specific subregions within the position monitoring region may comprise resonators configured to transmit locator signals with a particular common encoding for a fast initial position determination, followed by a reversion to resonator-specific locator signal encoding for a more precise position determination.

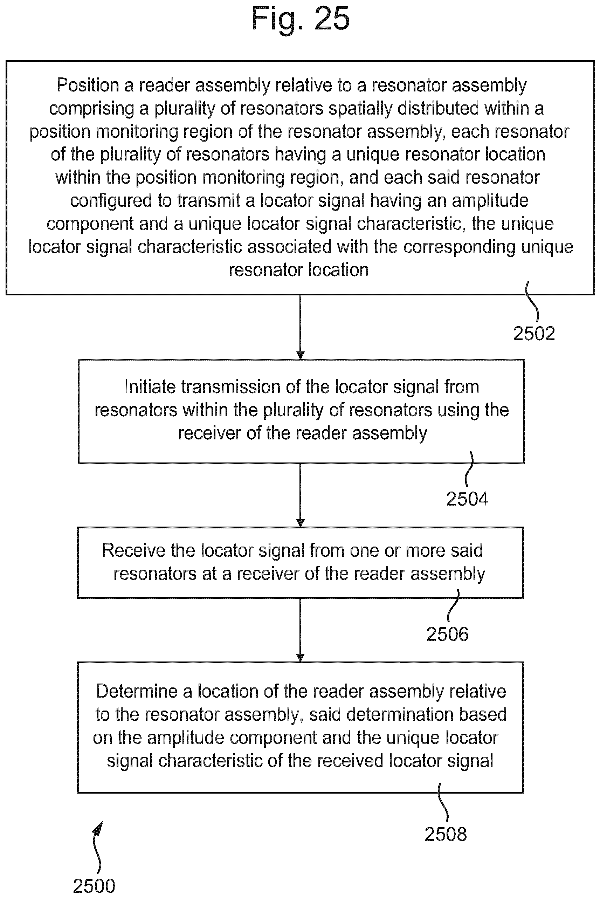

FIG. 25 shows steps of an example method 2500 for determining the position of a vehicle-based wireless power transfer apparatus relative to a ground-based wireless power transfer apparatus in accordance with the present disclosure, and suitable for performing using any example system described herein. The example method comprises the steps of: positioning a reader assembly relative to a resonator assembly comprising a plurality of resonators spatially distributed within a position monitoring region of the resonator assembly, each resonator of the plurality of resonators having a unique resonator location within the position monitoring region, and each resonator configured to transmit a locator signal having a signal amplitude and a unique locator signal characteristic, the unique locator signal characteristic associated with the corresponding unique resonator location 2502; initiating transmission of the locator signal from resonators within the plurality of resonators using the receiver of the reader assembly 2504; receiving the locator signal from one or more resonators at a reader of the reader assembly 2506; and determining a location of the reader assembly relative to the resonator assembly, the determination based on the signal amplitude and the unique locator signal characteristic of the received locator signal 2508. The particular example method 2500 shown includes initiation of transmission of the locator signals by passive resonators using the receiver. It will be appreciated that this step may be omitted in examples using active resonators. The example method 2500 shown may be implemented using any of the examples described herein.

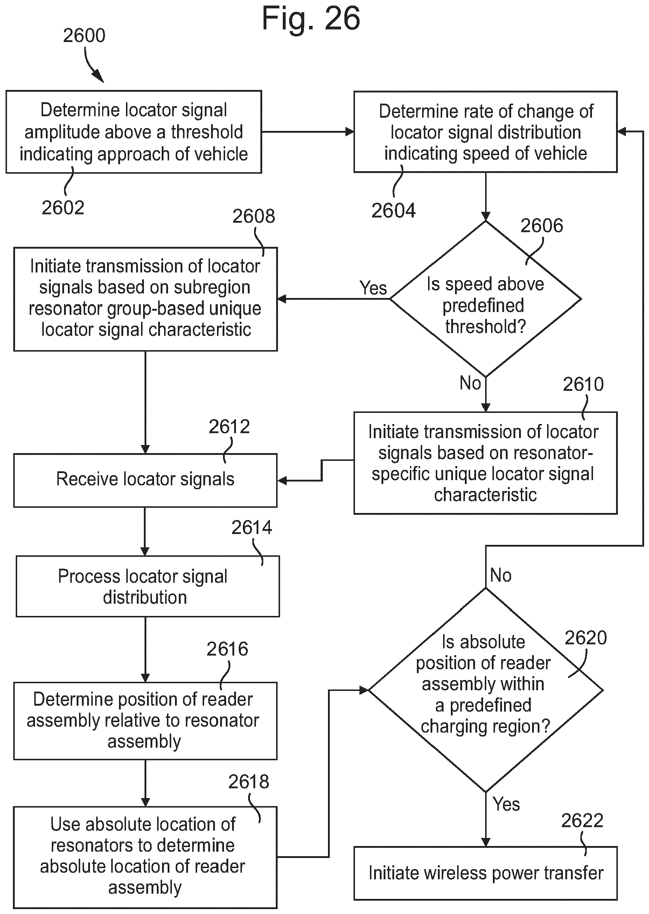

A further example method 2600 is for determining the position of a vehicle-based wireless power transfer apparatus relative to a ground-based wireless power transfer apparatus is shown in FIG. 26, which may be performed in accordance with the present disclosure, for example using any of the example systems described herein. The method 2600 comprises using a reader assembly of a vehicle, such as that described herein, to determine an approach of the vehicle toward a parking bay for wireless power transfer, such as to charge the battery of the vehicle. The determining by the reader assembly includes determining at least one locator signal reflected from a resonator assembly of a ground-based resonator housing, the at least locator signal having an amplitude above a predetermined threshold indicating proximity to the ground-based resonator housing 2602. In the specific example 2600 depicted, the method further comprises determining movement speed of the vehicle, such as by a rate of change of the locator signal distribution, to indicate a movement speed of the vehicle 2604. In such examples, a higher movement speed may cause a PD system to use a fast position determination, for example initiating transmission of locator signals from a group of resonators having unique locator signal characteristics specific to a particular subregion of the ground-based resonator housing. Such group-based subregion-specific locator signals could provide a fast determination of the position of vehicle during higher movement speeds, such as on initial approach to the ground-based resonator housing. The method may in such examples further comprises determining whether the determined movement speed is above a particular threshold 2606, and if so, initiate transmission of locator signals in accordance with the fast position determination approach described 2608. In such examples, if the movement speed is determined to be below the particular threshold, the PD system may initiate a finer position determination process wherein transmission of resonator-specific unique locator signals is initiated 2610, each locator signal comprising a unique locator signal characteristic associated with the location of the corresponding resonator. In each case, following receipt of the locator signals 2612, the method comprises processing, by a processor of the reader assembly, the distribution of the locator signals 2614 and, based on the distribution, determining a relative position of the reader assembly to the resonator assembly 2616. In some examples, each resonator comprises a known absolute location within the ground-based resonator housing, and the method may therefore comprise, based on the determined relative position of the reader assembly, and the known location of each resonator, determining an absolute location of the reader assembly 2618. The method may comprise determining, by the processor, whether the determined position of the reader assembly is within a predefined charging region of the ground-based resonator housing 2620, the predefined charging region specifying a region in which wireless power transfer between a ground-based WPT apparatus and a vehicle-based WPT apparatus of a WPT system is permitted as described herein. If the reader assembly is determined to be positioned within the predetermined charging region, the method may comprise initiating the wireless power transfer 2622.

Further examples will be appreciated which do not depart from the scope of the present disclosure. Any suitable combination of the features described herein may be incorporated into examples while remaining within the scope of the appended claims. For example, in the examples described, each resonator comprises a unique locator signal characteristic. Examples will be appreciated wherein resonators comprise an assigned locator signal characteristic which does not need to be unique to a specific resonator, and may instead be common to a group or subset of the resonators. In all cases, the unique or assigned locator signal characteristic is associated with a resonator location of the corresponding one or more resonators. In some examples, the assigned locator signal characteristic of a resonator may switch between a unique locator signal characteristic and a said group-wide locator signal characteristic, which may in some examples be caused by a switching between a crude position determination and a fine position determination as described herein.

The examples described herein comprise passive resonators. Examples will be appreciated wherein the resonators are passive, active, or semi-passive, or any suitable combination thereof. In particular examples wherein the resonators are active, the resonators may be configured to transmit a corresponding locator signal absent the receipt of an interrogation signal from the reader assembly. In such examples, all modulation frequencies may be derived from a corresponding resonator clock or crystal oscillator, or from a central clock or crystal oscillator of the GA. In examples comprising active resonators, each resonator may transmit a continuous locator signal which is encoded with a corresponding locator signal characteristic. For example the locator signals may have a common carrier frequency (which may be derived by the clock synchronisation) which is modulated by a corresponding modulation frequency. The VA receiver may in some examples receive the locator signals from the active resonators and use the carrier frequency to synchronize the receiver electronics, for example clock synchronisation, prior to performing the position determination. By acquiring a locator signal, and performing for example a fast-Fourier transform (FFT) thereon, the position can be determined based on sidebands which are distributed around the common carrier frequency as described. In any examples case wherein frequency drift between the VA and GA clocks is negligible, a synchronization of the VA receiver to the GA clock may be deemed unnecessary and may reserve associated computational resources and power. The common carrier frequency may in some examples be selected according to a determined lowest frequency noise region, for example by pre-scanning by the GA and analyzing the noise environment.

In other examples, the carrier frequency of the interrogation signal may be used as a communication channel between the VA and the GA, or between the receiver and the resonators, if required. Such use may comprise a determination that no spectral overlap is present between the locator signals (for example the modulation frequencies thereof) and the communication signals, or that any signal interference can be actively eliminated in the VA receiver processing unit. Other techniques such as time division multiplexing discussion herein may be useful for ensuring no overlap between the locator signals and any separate communication channel.

In examples comprises square wave locator signals, the fundamental modulation frequencies of resonators may be assigned in such a way that higher order modulation harmonics are not observed to overlap with the fundamental modulation frequencies.

In some cases, it may be possible for fundamental modulation frequencies of a square wave locator signal to form a frequency comb arrangement, in which case a constant offset frequency modulation may be applied to all resonators may be added such that there is no spectral overlap of the processed locator signals with higher order modulation harmonics.

In examples wherein intermodulation products may pose an issue, the spatial layout of resonators may be determined such that the corresponding locator signals, and optionally their corresponding modulation frequencies, are arranged such that neighboring resonators which appear within the same proximity-associated position determination procedure do not form a frequency comb structure. For example, the spatial arrangement of the resonators within the position monitoring region may be such that modulation frequencies of locator signals do not form a frequency comb structure.

The present disclosure may be further understood with reference to the following examples.

Example 1: A positioning system for determining a position of a vehicle-based wireless power transfer apparatus relative to a ground-based wireless power transfer apparatus, the system comprising: a resonator assembly having a position monitoring region, the resonator assembly comprising a plurality of resonators distributed within the position monitoring region, each said resonator having a resonator location in the position monitoring region, wherein each said resonator is configured to transmit a locator signal, the locator signal having a signal amplitude and an assigned locator signal characteristic, the assigned locator signal characteristic associated with the corresponding resonator location; and a reader assembly positionable relative to the resonator assembly, the reader assembly comprising: a receiver configured to receive the locator signals from at least one resonator of the plurality of resonators; and a processor configured to process a distribution of the received locator signals, to determine a position of the reader assembly relative to the resonator assembly, the determination based on: the amplitude of the received locator signals; and the assigned locator signal characteristic of the received locator signals.

Example 2: The positioning system of Example 1, wherein the assigned locator signal characteristic is at least in-part dependent on one or more electrical characteristics of the corresponding resonator.

Example 3: The positioning system of Example 2, wherein at least one of the one or more electrical characteristics is selected from a group consisting of: modulation frequency; Q-factor; impulse response; magnetic response.

Example 4: The positioning system of Example 1, Example 2, or Example 3, wherein the assigned locator signal characteristic is at least in-part dependent on one or more selected from: a modulation frequency of the corresponding resonator; an allocated locator signal transmission time slot of the corresponding resonator; an allocated locator signal encoding of the corresponding resonator.

Example 5:The positioning system Example 4, wherein the allocated locator signal encoding is configured to encode the locator signal with an assigned frequency hopping pattern.

Example 6: The positioning system of any one of Examples 1 to 5, wherein the receiver is further configured transmit an interrogation signal to be received by resonators of the resonator assembly, the interrogation signal comprising a predetermined carrier frequency; and wherein the resonators of the resonator assembly comprise a resonant circuit having a resonant frequency approximately equal to the carrier frequency.

Example 7: The positioning system of Example 6, wherein the assigned locator signal characteristic of each resonant circuit comprises a modulation frequency associated with the corresponding resonator.

Example 8: The positioning system of Example 7, wherein the modulation frequency of each corresponding resonator differs from a modulation frequency of a different corresponding resonator of the plurality of resonators by a predetermined modulation frequency difference; wherein the modulation frequencies of the plurality of resonators are within a frequency bandwidth, wherein the frequency bandwidth is the product of the predetermined modulation frequency difference and the number of resonators in the plurality of resonators.

Example 9: The positioning system of Example 8, wherein the processor is further configured to: mix the received locator signals down into a baseband; and filter the received and downmixed locator signals using the frequency bandwidth.

Example 10: The positioning system of any one of Examples 6 to 9, wherein the processor is configured to process the received locator signals having a frequency within a predefined frequency range about the predetermined carrier frequency.

Example 11: The positioning system of Example 10, wherein the predetermined carrier frequency is proximate a center frequency of the predetermined frequency range.

Example 12: The positioning system of Example 10 or Example 11, wherein the predefined frequency range is selected from: 90 kHz to 150 kHz; or an Industrial, Scientific, and Medical (ISM) band.

Example 13: The positioning system of any one of Examples 6 to 12, wherein the resonators are configured to modify the assigned locator signal characteristic based on the interrogation signal.

Example 14: The positioning system of any one of Examples 6 to 13, wherein the processor is further configured to: process the signal distribution to detect an interference signal; and is further configured to modify the interrogation signal based on the detected interference signal.

Example 15: The positioning system of any one of Examples 1 to 14, wherein the resonator assembly comprises a crystal oscillator, and wherein each resonator of the plurality of resonators is configured to perform clock synchronization based on the crystal oscillator.

Example 16: The positioning system of Example 15, wherein the resonators are configured to modify the assigned locator signal characteristic based on the clock synchronization.

Example 17: The positioning system of Example 15 or Example 16, wherein each resonator of the plurality of resonators comprises a corresponding said crystal oscillator.

Example 18: The positioning system of Example 15 or Example 16, wherein the resonator assembly comprises a single said crystal oscillator, wherein each resonator of the plurality of resonators is configured to perform clock synchronization based on the single crystal oscillator.

Example 19: The positioning system of any one of Examples 1 to 18, wherein the plurality of resonators comprises at least one of: a passive resonator; an active resonator; a semi-passive resonator.

Example 20: The positioning system of any one of Examples 1 to 19, wherein the processor is further arranged to, based on the position determination, transmit instructions to a wireless power transfer system comprising a vehicle-based wireless power transfer apparatus and a ground-based wireless power transfer apparatus, the instructions configured to cause wireless power transfer between the vehicle-based wireless power transfer apparatus and the ground-based wireless power transfer apparatus.

Example 21: The positioning system of Example 20, wherein the resonator assembly is integrated into the ground-based wireless power transfer apparatus of the wireless power transfer system, and wherein the reader assembly is integrated into the vehicle-based wireless power transfer apparatus of the wireless power transfer system.

Example 22: The positioning system of any one of Examples 1 to 21, wherein the plurality of resonators comprises a plurality of resonator groups, each said resonator group comprising one or more resonators having a corresponding locator signal value of the assigned locator signal characteristic; wherein each said locator signal value is associated with the corresponding resonator group.

Example 23: The positioning system of any one of Examples 1 to 22, wherein the position monitoring region comprises a plurality of discrete subregions, each subregion comprising a corresponding one of the resonator groups.

Example 24: The positioning system of any one of Examples 1 to 23, wherein a resonator of the plurality of resonators is configured to communicate with the reader assembly by way of a communication channel other than the locator signal.

Example 25: A method for determining the position of a vehicle-based wireless power transfer apparatus relative to a ground-based wireless power transfer apparatus, the method comprising: positioning a reader assembly relative to a resonator assembly comprising a plurality of resonators spatially distributed within a position monitoring region of the resonator assembly, each resonator of the plurality of resonators having a resonator location within the position monitoring region, and each said resonator configured to transmit a locator signal having a signal amplitude and an assigned locator signal characteristic, the assigned locator signal characteristic associated with the corresponding resonator location; receiving the locator signal from one or more said resonators at a reader of the reader assembly; determining a location of the reader assembly relative to the resonator assembly, the determination based on the signal amplitude and the assigned locator signal characteristic of the received locator signal.

Example 26: The method of Example 25, wherein the method further comprises: initiating transmission of the locator signal from at least one resonator of the plurality of resonators using the receiver of the reader assembly;

Example 27: The method of Example 26, wherein the initiating transmission comprises: transmitting, by the receiver, an interrogation signal to be received by resonators of the resonator assembly.

Example 28: The method of Example 25, Example 26 or Example 27, wherein the method is performed by a positioning system of any one of Examples 1 to 24.

Example 29: A resonator assembly configured to cooperate with a reader assembly for determining a position of a vehicle-based wireless power transfer apparatus relative to a ground-based wireless power transfer apparatus, the resonator assembly comprising: a position monitoring region; a plurality of resonators distributed within the position monitoring region, each said resonator having a resonator location in the position monitoring region, wherein each said resonator is configured to transmit a locator signal to the reader assembly, the locator signal having a signal amplitude and an assigned locator signal characteristic the assigned locator signal characteristic associated with the corresponding resonator location.

Example 30: A reader assembly configured to cooperate with a resonator assembly for determining a position of a vehicle-based wireless power transfer apparatus relative to a ground-based wireless power transfer apparatus, the reader assembly comprising: a reader assembly positionable relative to the resonator assembly, the reader assembly comprising: a receiver configured to receive a plurality of locator signals from respective resonators within the resonator assembly; and a processor configured to process a distribution of the received locator signals, to determine a position of the reader assembly relative to the resonator assembly, the determination based on: the signal amplitude of the received locator signals; and the assigned locator signal characteristic of the received locator signals.

Example 31: A vehicle comprising the reader assembly of Example 30.

The systems and processes described above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be illustrative and not limiting. Only the claims that follow are meant to set bounds as to what the present invention includes. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real time. It should also be noted that the systems and/or methods described above may be applied to, or used in accordance with, other systems and/or methods.

**Claims**

1. A positioning system for determining a position of a vehicle-based wireless power transfer apparatus relative to a ground-based wireless power transfer apparatus, the system comprising:

   a resonator assembly having a position monitoring region, the resonator assembly comprising a plurality of resonators distributed within the position monitoring region, each said resonator having a resonator location in the position monitoring region, wherein each said resonator is configured to transmit a locator signal, the locator signal having a signal amplitude and an assigned locator signal characteristic, the assigned locator signal characteristic associated with the corresponding resonator location; and
   a reader assembly positionable relative to the resonator assembly, the reader assembly comprising:

      a receiver configured to receive the locator signals from at least one resonator of the plurality of resonators; and
      a processor configured to process a distribution of the received locator signals, to determine a position of the reader assembly relative to the resonator assembly, the determination based on: the amplitude of the received locator signals; and the assigned locator signal characteristic of the received locator signals.

2. The positioning system as claimed in claim 1, wherein the assigned locator signal characteristic is at least in-part dependent on one or more electrical characteristics of the corresponding resonator.

3. The positioning system as claimed in claim 2, wherein at least one of the one or more electrical characteristics is selected from a group consisting of: modulation frequency; Q-factor; impulse response; magnetic response.

4. The positioning system as claimed in claim 1, claim 2, or claim 3, wherein the assigned locator signal characteristic is at least in-part dependent on one or more selected from: a modulation frequency of the corresponding resonator; an allocated locator signal transmission time slot of the corresponding resonator; an allocated locator signal encoding of the corresponding resonator.

5. The positioning system as claimed in any one of claims 1 to 4, wherein the receiver is further configured transmit an interrogation signal to be received by resonators of the resonator assembly, the interrogation signal comprising a predetermined carrier frequency; and
   wherein the resonators of the resonator assembly comprise a resonant circuit having a resonant frequency approximately equal to the carrier frequency.

6. The positioning system as claimed in claim 5, wherein the assigned locator signal characteristic of each resonant circuit comprises a modulation frequency associated with the corresponding resonator.

7. The positioning system as claimed in claim 5 or claim 6, wherein the resonators are configured to modify the assigned locator signal characteristic based on the interrogation signal.

8. The positioning system as claimed in any one of the preceding claims, wherein the processor is further arranged to, based on the position determination, transmit instructions to a wireless power transfer system comprising a vehicle-based wireless power transfer apparatus and a ground-based wireless power transfer apparatus, the instructions configured to cause wireless power transfer between the vehicle-based wireless power transfer apparatus and the ground-based wireless power transfer apparatus.

9. The positioning system as claimed in any one of the preceding claims, wherein the plurality of resonators comprises a plurality of resonator groups, each said resonator group comprising one or more resonators having a corresponding locator signal value of the assigned locator signal characteristic; wherein each said locator signal value is associated with the corresponding resonator group.

10. The positioning system as claimed in any one of the preceding claims, wherein the position monitoring region comprises a plurality of discrete subregions, each subregion comprising a corresponding one of the resonator groups.

11. A method for determining the position of a vehicle-based wireless power transfer apparatus relative to a ground-based wireless power transfer apparatus, the method comprising:

   positioning a reader assembly relative to a resonator assembly comprising a plurality of resonators spatially distributed within a position monitoring region of the resonator assembly, each resonator of the plurality of resonators having a resonator location within the position monitoring region, and each said resonator configured to transmit a locator signal having a signal amplitude and an assigned locator signal characteristic, the assigned locator signal characteristic associated with the corresponding resonator location;

receiving the locator signal from one or more said resonators at a reader of the reader assembly; and

determining a location of the reader assembly relative to the resonator assembly, the determination based on the signal amplitude and the assigned locator signal characteristic of the received locator signal.

12. A non-transitory storage medium having computer-readable instructions stored thereon, the computer readable instructions operable when executed by a processing device to:

initiate transmission of a locator signal from at least one resonator of a plurality of resonators of a resonator assembly, using a receiver of a reader assembly, the plurality of resonators spatially distributed within a position monitoring region of the resonator assembly, each resonator of the plurality of resonators having a resonator location within the position monitoring region, and each said resonator configured to transmit the locator signal having a signal amplitude and an assigned locator signal characteristic, the assigned locator signal characteristic associated with the corresponding resonator location;

receive the locator signal from one or more said resonators; and

determine a location of the reader assembly relative to the resonator assembly, said determination based on the signal amplitude and the assigned locator signal characteristic of the received locator signal.

13. A resonator assembly configured to cooperate with a reader assembly for determining a position of a vehicle-based wireless power transfer apparatus relative to a ground-based wireless power transfer apparatus, the resonator assembly comprising:

a position monitoring region;

a plurality of resonators distributed within the position monitoring region, each said resonator having a resonator location in the position monitoring region, wherein each said resonator is configured to transmit a locator signal to the reader assembly, the locator signal having a signal amplitude and an assigned locator signal characteristic the assigned locator signal characteristic associated with the corresponding resonator location.

14. A reader assembly configured to cooperate with a resonator assembly for determining a position of a vehicle-based wireless power transfer apparatus relative to a ground-based wireless power transfer apparatus, the reader assembly comprising:

a reader assembly positionable relative to the resonator assembly, the reader assembly comprising:

a receiver configured to receive a plurality of locator signals from respective resonators within the resonator assembly; and

a processor configured to process a distribution of the received locator signals, to determine a position of the reader assembly relative to the resonator assembly, the determination based on: the signal amplitude of the received locator signals; and the assigned locator signal characteristic of the received locator signals.

15. A vehicle comprising the reader assembly according to claim 14.

Fig. 1

Fig. 2

# Fig. 3A

# Fig. 3B

Fig. 4

## Fig. 5A

Fig. 5B

# Fig. 6A

504b 504c

504f 504g

Fig. 6B

Fig. 7

Fig. 8

# Fig. 9

# Fig. 10A

# Fig. 10B

# Fig. 11

## Fig. 12A

## Fig. 12B

# Fig. 13A

# Fig. 13B

# Fig. 14A

# Fig. 14B

# Fig. 15A

# Fig. 15B

## Fig. 16A

## Fig. 16B

## Fig. 16C

## Fig. 16D

Fig. 17A

Fig. 17B

Fig. 17C

Fig. 17D

# Fig. 18

## Fig. 19A

## Fig. 19B

Fig. 20A

Fig. 20B

Fig. 20C

Fig. 20D

# Fig. 21A

# Fig. 21B

## Fig. 22A

## Fig. 22B

# Fig. 23

## Fig. 24

# Fig. 25

Position a reader assembly relative to a resonator assembly comprising a plurality of resonators spatially distributed within a position monitoring region of the resonator assembly, each resonator of the plurality of resonators having a unique resonator location within the position monitoring region, and each said resonator configured to transmit a locator signal having an amplitude component and a unique locator signal characteristic, the unique locator signal characteristic associated with the corresponding unique resonator location

2502

Initiate transmission of the locator signal from resonators within the plurality of resonators using the receiver of the reader assembly

2504

Receive the locator signal from one or more said resonators at a receiver of the reader assembly

2506

Determine a location of the reader assembly relative to the resonator assembly, said determination based on the amplitude component and the unique locator signal characteristic of the received locator signal

2508

2500

# Fig. 26

2600

Determine locator signal amplitude above a threshold indicating approach of vehicle

2602

Determine rate of change of locator signal distribution indicating speed of vehicle

2604

2606

Is speed above predefined threshold?

Yes

2608

Initiate transmission of locator signals based on subregion resonator group-based unique locator signal characteristic

No

2610

Initiate transmission of locator signals based on resonator-specific unique locator signal characteristic

2612

Receive locator signals

2614

Process locator signal distribution

2616

Determine position of reader assembly relative to resonator assembly

No

2620

Is absolute position of reader assembly within a predefined charging region?

2618

Use absolute location of resonators to determine absolute location of reader assembly

Yes

2622

Initiate wireless power transfer

Europäisches
Patentamt

European
Patent Office

Office européen
des brevets

## EUROPEAN SEARCH REPORT

**Application Number**

EP 24 19 9351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/262002 A1 (WIDMER HANSPETER [CH] ET AL) 18 October 2012 (2012-10-18) * paragraph [0044] - paragraph [0150]; claims 1-27; figures 1-25 * ----- | 1-15 | INV. B60L53/122 B60L53/126 B60L53/36 B60L53/38 |
| X | US 2019/255965 A1 (HOCKE FREDRIK [DE] ET AL) 22 August 2019 (2019-08-22) * paragraph [0052] - paragraph [0085]; claims 1-15; figures 1-11 * ----- | 1-15 | B60L53/65 B60L53/30 B60L53/66 H02J50/12 H02J50/80 |
| A | US 2022/212556 A1 (SOTIRIOU SOTIRIOS [DE] ET AL) 7 July 2022 (2022-07-07) * paragraph [0094] - paragraph [0116]; claims 1-18; figures 1-6 * ----- | 1-15 | H02J50/90 B60L53/39 H01F38/14 H04B5/26 |
| A | US 2017/136906 A1 (DRAEGER TOBIAS [DE] ET AL) 18 May 2017 (2017-05-18) * paragraph [0041] - paragraph [0108]; claims 1-20; figures 1-12 * ----- | 1-15 | |

**TECHNICAL FIELDS SEARCHED (IPC)**

B60L
H02J
H04B
H01F

The present search report has been drawn up for all claims

| Place of search | Date of completion of the search | Examiner |
|---|---|---|
| The Hague | 24 February 2025 | Koutsorodis, Dafni |

EPO FORM 1503 03.82 (P04C01)

## ANNEX TO THE EUROPEAN SEARCH REPORT
## ON EUROPEAN PATENT APPLICATION NO.

EP 24 19 9351

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | Publication date | Patent family member(s) | | Publication date |
|---|---|---|---|---|
| US 2012262002 A1 | 18-10-2012 | CN | 103477566 A | 25-12-2013 |
| | | EP | 2697910 A1 | 19-02-2014 |
| | | JP | 6019103 B2 | 02-11-2016 |
| | | JP | 2014518607 A | 31-07-2014 |
| | | KR | 20140022867 A | 25-02-2014 |
| | | US | 2012262002 A1 | 18-10-2012 |
| | | WO | 2012142040 A1 | 18-10-2012 |
| US 2019255965 A1 | 22-08-2019 | CN | 109890649 A | 14-06-2019 |
| | | DE | 102016221474 A1 | 03-05-2018 |
| | | US | 2019255965 A1 | 22-08-2019 |
| | | WO | 2018082933 A1 | 11-05-2018 |
| US 2022212556 A1 | 07-07-2022 | CN | 114786987 A | 22-07-2022 |
| | | EP | 4034414 A1 | 03-08-2022 |
| | | GB | 2587800 A | 14-04-2021 |
| | | JP | 7429773 B2 | 08-02-2024 |
| | | JP | 2022550313 A | 01-12-2022 |
| | | US | 2022212556 A1 | 07-07-2022 |
| | | WO | 2021058733 A1 | 01-04-2021 |
| US 2017136906 A1 | 18-05-2017 | DE | 102014215350 A1 | 04-02-2016 |
| | | EP | 3178148 A1 | 14-06-2017 |
| | | JP | 6605582 B2 | 13-11-2019 |
| | | JP | 2017528703 A | 28-09-2017 |
| | | KR | 20170039717 A | 11-04-2017 |
| | | US | 2017136906 A1 | 18-05-2017 |
| | | WO | 2016020326 A1 | 11-02-2016 |

EPO FORM P0459

For more details about this annex : see Official Journal of the European Patent Office, No. 12/82

**REFERENCES CITED IN THE DESCRIPTION**

**Patent documents cited in the description**

- US 8933594 B
- US 9561730 B
- US 9561730 B2
- US 48683023
- US 11394253 B
- US 9971353 B
- US 10343537 B